# EUROPÄISCHE PATENTSCHRIFT

(11) **EP 2 516 972 B1**
(45) Veröffentlichungstag und Bekanntmachung des Hinweises auf die Patenterteilung: **10.11.2021**
(21) Anmeldenummer: 10792868.1
(22) Anmeldetag: 25.11.2010
(51) Int. Cl.: G01F 1/84

(54) **MESSAUFNEHMER VOM VIBRATIONSTYP**
VIBRATION TYPE SENSOR
CAPTEUR DE MESURE DU TYPE À VIBRATIONS

(30) Priorität: 20.08.2010 DE 102010039627; 21.12.2009 DE 102009055069
(43) Veröffentlichungstag der Anmeldung: 31.10.2012
(73) Patentinhaber: Endress+Hauser Flowtec AG, 4153 Reinach (CH)
(72) Erfinder: HUBER, Christof, 3007 Bern (CH); BITTO, Ennio, CH-4147 Aesch (BL) (CH); BRAUN, Marcel, 79594 Inzlingen (DE); RIEDER, Alfred, 84032 Landshut (DE); SCHÜTZE, Christian, CH-4055 Basel (BS) (CH)
(74) Vertreter: Andres, Angelika Maria
(86) Internationale Anmeldenummer: PCT/EP2010/068250
(87) Internationale Veröffentlichungsnummer: WO 2011/085851

(56) Entgegenhaltungen:
- WO-A2-96/08697
- DE-A1-102004 035 971
- DE-A1-102009 001 472
- None

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums. Ferner betrifft die Erfindung ein In-line-Meßgerät mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien, etwa einer wässrigen Flüssigkeit, einem Gas, einem Flüssigkeits-Gas-Gemisch, einem Dampf, einem Öl, einer Paste, einem Schlamm oder einem anderen strömungsfähigen Stoff, oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 47 93 191, der US-A 2002/0157479, der US-A 2006/0150750, der US-A 2007/0151368, der US-A 53 70 002, der US-A 57 96 011, der US-B 63 08 580, der US-B 64 15 668, der
US-B 67 11 958, der US-B 69 20 798, der US-B 71 34 347, der US-B 73 92 709, oder der
WO-A 03/027616 der ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet. Zum Führen von zumindest zeitweise strömendem, ggf. auch extrem heißem, Medium umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die beiden Meßrohre im Nutzmode zumindest anteilig, insb. auch überwiegend, zu gegenphasigen Biegeschwingungen differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungsmeßsignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der zwei Meßrohre gebildete Rohranordnung mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz der Rohranordnung gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer freie Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegenphasige Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegenphasige Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gebogener Meßrohre entspricht dabei die Länge eines zwischen dem einlaßseitigem und dem auslaßseitigen Kopplerelement verlaufenden Abschnitts einer Biegelinie des jeweiligen Meßrohrs, mithin einer die Flächenschwerpunkte aller gedachten Querschnittsflächen des jeweiligen Meßrohrs verbindende gedachte Mittelllinie des nämlichen Meßrohrs, der freien Schwinglänge der Meßrohre. Mittels der ― insoweit mit zur Rohranordnung gehörigen - Kopplerelementen kann zudem auch eine Schwingungsgüte der Rohranordnung wie auch die Empfindlichkeit des Meßaufnehmers insgesamt beeinflußt werden, in der Weise, daß für eine minimal geforderte Empfindlichkeit des Meßaufnehmers zumindest eine minimale freie Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 1000 t/h jeweils für Druckverluste von weniger als 3 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 1500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Ausgehend vom oben genannten Stand der Technik besteht daher eine Aufgabe der Erfindung darin, einen Meßaufnehmer von hoher Empfindlichkeit und Schwingungsgüte anzugeben, der auch bei großen Massendurchflußraten von mehr als 1000 t/h einen geringen Druckverlust von möglichst weniger als 3 bar verursacht, und der auch mit großer nomineller Nennweite von über 100 mm eine möglichst kompakter Bauweise aufweist und nicht zuletzt auch für Anwendungen mit extrem heißen bzw. extrem kalten Medien und/oder mit signifikant schwankenden Mediumstemperaturen geeignet ist.

Zur Lösung der Aufgabe besteht die Erfindung in einem Meßaufnehmer vom Vibrationstyp gemäß dem unabhängigen Anspruch 1.

Darüberhinaus besteht die Erfindung in einem In-Line-Meßgerät zum Messen einer Dichte und/oder einer Massendurchflußrate, insb. auch eines über ein Zeitintervall totalisierten Gesamt-Massendurchflusses, eines in einer Rohrleitung zumindest zeitweise, insb. mit einer Massendurchflußrate von mehr als 1000 t/h, strömenden Mediums, insb. eines Gases, einer Flüssigkeit, eines Pulvers oder eines anderen strömungsfähigen Stoffes, welches, insb. als Kompaktgerät ausgebildete, In-Line-Meßgerät einen der vorgenannten Meßaufnehmer sowie eine mit dem Meßaufnehmer elektrisch gekoppelte, insb. auch mechanisch starr verbundene, Meßgerät-Elektronik umfaßt.

Ein Grundgedanke der Erfindung besteht darin, anstelle der bei konventionellen Meßaufnehmern großer Nennweite üblicherweise verwendeten Rohranordnungen mit zwei parallel durchströmten Meßrohre Rohranordnungen mit vier parallel durchströmte, beispielsweise V-förmig oder kreisbogenförmig, gebogene Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 1000 t/h, gewährleisten zu können. Darüber hinaus kann der sich aus dem Gesamtquerschnitt der vier Meßrohre ergebende effektive Strömungsquerschnitt der Rohranordnung im Vergleich zu herkömmlichen nur zwei Meßrohre aufweisenden Meßaufnehmern gleicher nomineller Nennweite und gleicher Leermasse ohne weiteres um mehr als 20% erhöht werden.

Ein Vorteil der Erfindung besteht zudem u.a. darin, daß durch die Verwendung gebogener Meßrohre dauerhafte mechanische Spannungen, beispielsweise infolge thermisch bedingter Ausdehnung der Meßrohre oder infolge von seitens der Rohranordnung in den Meßaufnehmer eingetragener Einspannkräfte, innerhalb der Rohranordnung weitgehend vermieden oder zumindest sehr niedrig gehalten und damit einhergehend die Meßgenauigkeit wie auch die strukturelle Integrität des jeweiligen Meßaufnehmers auch bei extrem heißen Medien bzw. zeitlich stark schwankenden Temperaturgradienten innerhalb der Rohranordnung sicher erhalten werden. Darüberhinaus können aufgrund der Symmetrieeigenschaften der Rohranordnung auch jene durch Biegeschwingungen gebogener Meßrohre Querkräfte weitgehend neutralisiert werden, die - wie u.a. in den eingangs erwähnten EP-A 1 248 084 und US-B 73 50 421 diskutiert - im wesentlich senkrecht zu den Längsschnittebenen des jeweiligen Meßaufnehmers bzw. dessen Rohranordnung wirken und für die Meßgenauigkeit von Meßaufnehmern vom Vibrationstyp durchaus schädlich sein können.

Ein weiterer Vorteil des erfindungsgemäßen Meßaufnehmers ist ferner auch darin zu sehen, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher besonders zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 1000 t/h sind, insb. zumindest zeitweise mehr als 1500 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fign. 1, 2: ein, beispielsweise als Coriolis-Durchfluss/Dichte/Viskositäts-Meßgerät dienendes, In-Line-Meßgerät in perspektivischen, teilweise auch geschnittenen, Seitenansichten;
- Fign. 3a, b: eine Projektion des In-line-Meßgerät gemäß Fig. 1 in zwei verschiedenen Seitenansichten;
- Fig. 4a: in perspektivischer Seitenansicht einen Meßaufnehmer vom Vibrationstyp mit einer mittels vier gebogenen Meßrohren gebildeten Rohranordnung, eingebaut in ein Inline-Meßgerät gemäß Fig. 1;
- Fig. 4b: in perspektivischer Seitenansicht die Rohranordnung gemäß Fig. 4a;
- Fign. 5a, b: eine Projektion des Meßaufnehmers gemäß Fig. 4 in zwei verschiedenen Seitenansichten; und
- Fign. 6a, b: Projektionen einer Rohranordnung des Meßaufnehmers gemäß Fig. 4 in zwei verschiedenen Seitenansichten.

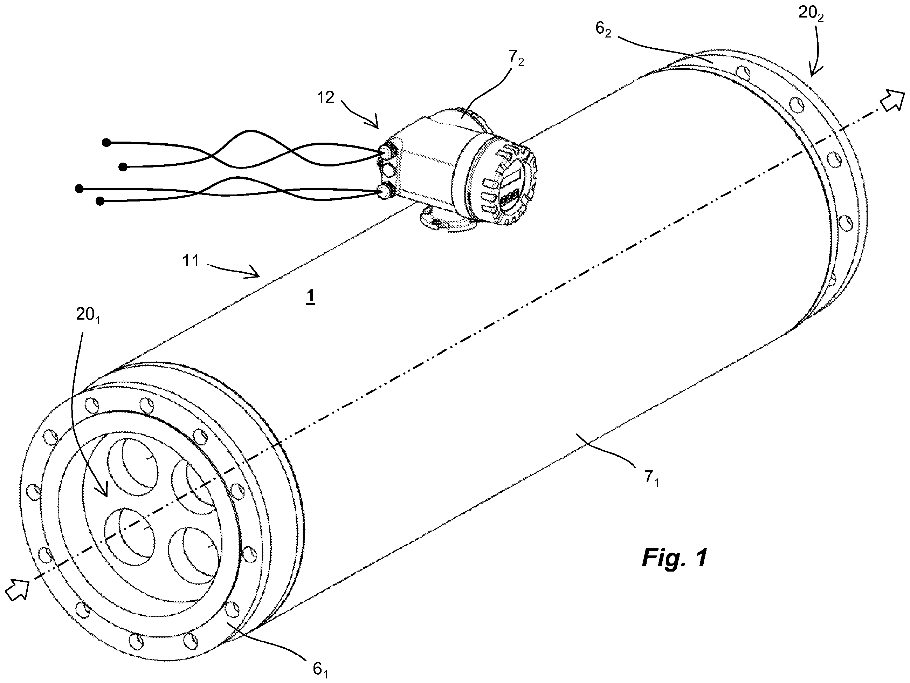

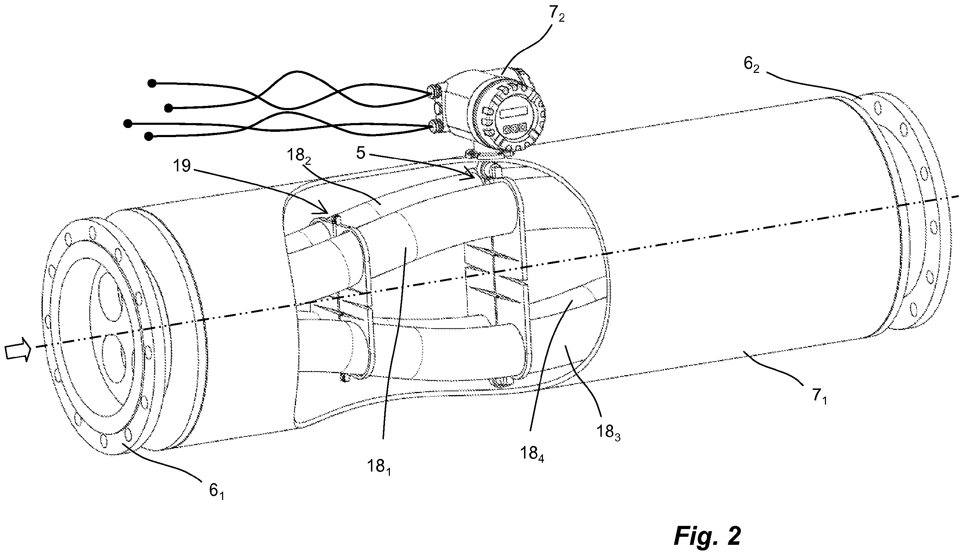

In den Fig. 1, 2 ist ein, insb. als Coriolis-Massedurchfluß- und/oder Dichte-Meßgerät ausgebildetes, In-Line-Meßgerät 1 schematisch dargestellt, das dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das In-Line-Meßgerät 1 ggf. auch dazu verwendet werden eine Dichte p und/oder eine Viskosität η des Mediums zu messen. Im besonderen ist das In-Line-Meßgerät dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Nicht zuletzt ist das In-Line-Meßgerät auch dafür vorgesehen strömende Medien der vorgenannten Art zu messen, die mit einer Massendurchflußrate von größer als 1000 t/h, insb. von größer 1500 t/h, strömen gelassen sind.

Das In-Line-Meßgerät 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen, sondern lediglich als schematisch als Schaltungsblock dargestellte - Meßgerät-Elektronik 12. In vorteilhafter Weise ist die Meßgerät-Elektronik 12 so ausgelegt, daß sie im Betrieb des In-Line-Meßgerät 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren ist die Meßgerät-Elektronik 12 so ausgelegt, daß sie von einer externen Energieversorgung, beispielsweise auch über das vorgenannte Feldbussystem, gespeist werden kann. Für den Fall, daß das In-line-Meßgerät 1 für eine Ankopplung an ein Feldbus- oder ein anderes Kommunikationssystem vorgesehen ist, weist die, insb. programmierbare, Meßgerät-Elektronik 12 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

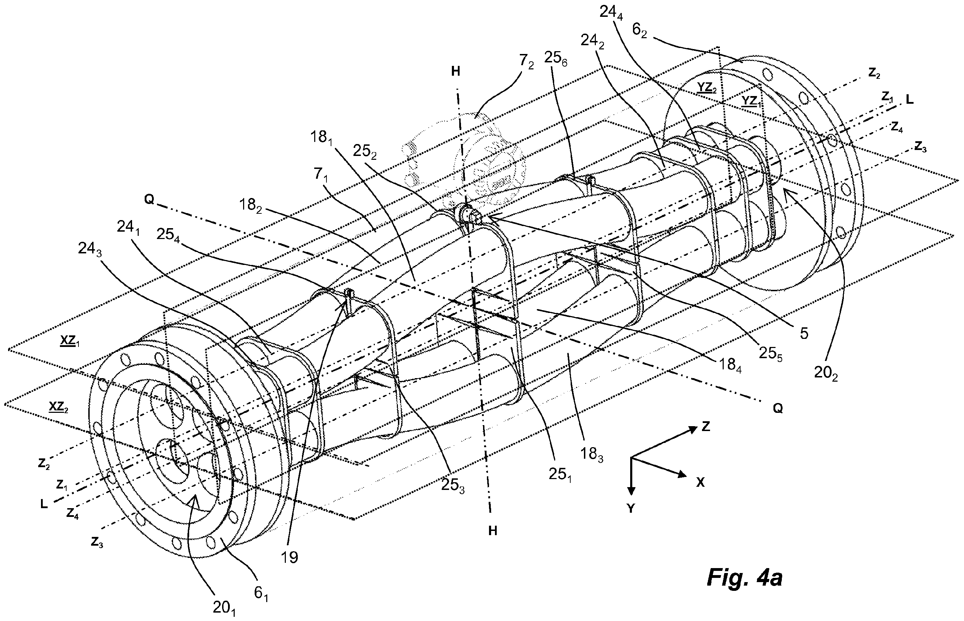

In den Fig. 4a, 4b, 5a, 5b, 6a, 6b ist in unterschiedlichen Darstellungen ein Ausführungsbeispiel für einen für das In-Line-Meßgerät 1 geeigneten, insb. als Coriolis-Massedurchfluss-, als Dichte-und/oder als Viskositäts-Aufnehmer dienenden, Meßaufnehmer 11 vom Vibrationstyp gezeigt, welcher Meßaufnehmer 11 im Betrieb in den Verlauf einer von einem zu messenden, beispielsweise pulvrigen, flüssigen, gasförmigen oder dampfförmigen, Medium durchströmten - aus Gründen der Übersichtlichkeit hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Meßgerät-Elektronik entsprechend implementierten Auswerte-Verfahren in der dem Fachmann bekannten Weise z.B. der Massendurchfluß, die Dichte und/oder die Viskosität des Mediums gemessen werden.

Der Meßaufnehmer 11 weist ein u.a. auch als Traggestell dienendes - hier im wesentlichen rohrförmiges, außen kreiszylindrisches - Aufnehmer-Gehäuse 7₁, in dem weitere, dem Erfassen der wenigstens einen Meßgröße dienende Komponenten des Meßaufnehmers 11 vor äußeren Umwelteinflüssen geschützt untergebracht sind. Im hier gezeigten Ausführungsbeispiel ist zumindest ein Mittelsegment des Aufnehmer-Gehäuses 7₁ mittels eines geraden, insb. kreiszylindrischen, Rohres gebildet, so daß zur Fertigung des Aufnehmer-Gehäuses beispielsweise auch kostengünstige, geschweißte oder gegossenen Standardrohre, beispielsweise aus Stahlguß oder geschmiedetem Stahl, verwendet werden können.

Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D} bzw. 20_{2A}, 20_{2B}, 20_{2C}, 20_{2D} auf.

Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht.

Infolge der für den Meßaufnehmer letztlich angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4a ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem - nicht zuletzt auch bei angestrebt hohen Massendurchflußraten von über 1000 t/h - sind nach einer anderen Ausgestaltung der Erfindung die Einbaulänge und die nominelle Nennweite des Meßaufnehmers aufeinander abgestimmt so bemessen, daß ein Nennweite-zu Einbaulänge-Verhältnis D₁₁/ L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist.

In einer weiteren Ausgestaltung des Meßaufnehmers umfaßt das Aufnehmer-Gehäuse ein im wesentlichen rohrförmiges Mittelsegment. Ferner ist vorgesehen, das Aufnehmer-Gehäuse so zu dimensionieren, daß ein durch durch ein Verhältnis des größten Gehäuse-Innendurchmessers zur nominellen Nennweite des Meßaufnehmers definiertes Gehäuse-Innendurchmesser-zu-Nennweite-Verhältnis des Meßaufnehmers, zwar größer als 0.9, jedoch kleiner als 1.5, möglichst aber kleiner als 1.2 ist.

Bei dem hier gezeigten Ausführungsbeispiel schließen sich ein- bzw. auslaßseitig an das Mittelsegment ferner ebenfalls rohrförmige Endsegmente des Aufnehmergehäuses an. Für den im Ausführungsbeispiel gezeigten Fall, daß das Mittelsegment und die beiden Endsegmente wie auch die mit dem jeweiligen Flansch verbundenen Strömungsteiler im Vor- bzw. Auslaufbereich jeweils den gleichen Innendurchmesser aufweisen, kann das Aufnehmer-Gehäuse in vorteilhafter Weise auch mittels eines einstückigen, beispielsweise gegossenen oder geschmiedeten, Rohres gebildet werden, an dessen Enden die Flansche angeformt oder angeschweißt sind, und bei dem die Strömungsteiler mittels, insb. von den Flanschen etwas beabstandet, an die Innenwand orbital und/oder mittels Laser angeschweißten, die Strömungsöffnungen aufweisenden Platten gebildet sind. Insbesondere für den Fall, daß das erwähnte Gehäuse-Innenendurchmesser-zu-Nennweite-Verhältnis des Meßaufnehmers gleich eins gewählt ist, kann für Fertigung des Aufnehmer-Gehäuses beispielsweise ein der anzuschließenden Rohrleitung hinsichtlich Kaliber, Wandstärke und Material entsprechendes und insoweit auch hinsichtlich des erlaubten Betriebsdrucks entsprechend angepaßtes Rohr mit entsprechend passender Länge verwendet werden. Zur Vereinfachung des Transports des Meßaufnehmers bzw. des gesamten damit gebildeten In-line-Meßgeräts können ferner, wie beispielsweise auch in der eingangs erwähnten US-B 73 50 421 vorgeschlagen, einlaßseitig und auslaßseitig am außen am Aufnehmer-Gehäuse fixierte eine Transport-Öse vorgesehen sein.

Zum Führen des zumindest zeitweise durch Rohrleitung und Meßaufnehmer strömenden Mediums umfaßt der erfindungsgemäße Meßaufnehmer ferner eine Rohranordnung mit genau vier im Aufnehmer-Gehäuse 10 schwingfähig gehalterte gebogene, beispielsweise zumindest abschnittsweise V-förmige oder - wie hier schematisch dargestellt - zumindest abschnittsweise kreisbogenförmige, Meßrohre 18₁, 18₂, 18₃, 18₄. Die vier - hier gleichlangen und paarweise parallelen - Meßrohre kommunizieren jeweils mit der an den Meßwandler angeschlossene Rohrleitung und werden im Betrieb zumindest zeitweise in wenigstens einem für Ermittlung der physikalischen Meßgröße geeigneten Schwingungsmode, dem sogenannten Nutz-Mode, vibrieren gelassen. Im besonderen eignet sich als Nutz-Mode z.B. ein jedem der Meßrohre 18₁, 18₂, 18₃ bzw. 18₄ naturgemäß innewohnende Biegeschwingungsgrundmode, der bei minimaler Biegeschwingungs-Resonanzfrequenz , f₁₈₁, f₁₈₂, f₁₈₃ bzw. f₁₈₄, genau einen Schwingungsbauch aufweist. Von den vier Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ schwingfähig gehaltert sind.

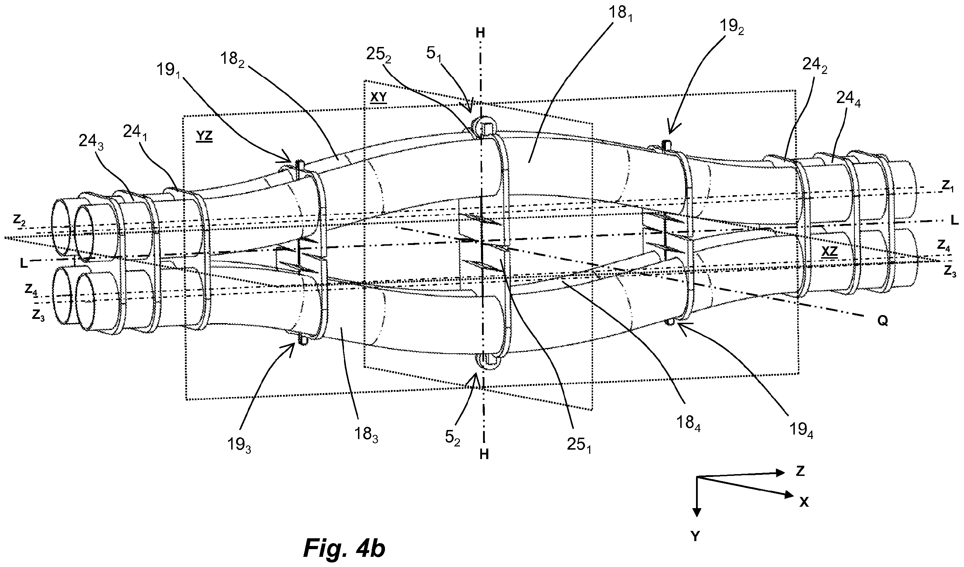

Beim erfindungsgemäßen Meßaufnehmer sind die Meßrohre - wie auch aus der Zusammenschau der Fig. 2, 4a und 4b ohne weiteres ersichtlich - so ausgebildet und im Meßaufnehmer angeordnet, daß die Rohranordnung eine sowohl zwischen dem ersten Meßrohr 18₁ und dem dritten Meßrohr 18₃ als auch zwischen dem zweiten Meßrohr 18₂ und dem vierten Meßrohr 18₄ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem ersten Meßrohr 18₁ und zweiten Meßrohr 18₂ als auch zwischen dem dritten Meßrohr 18₃ und vierten Meßrohr 18₄ verlaufende zweite gedachte Längsschnittebene YZ aufweist, bezüglich der die Rohranordnung gleichfalls spiegelsymmetrisch ist. Im Ergebnis dessen sind nicht nur durch allfällige thermisch bedingte Ausdehnung der Meßrohre innerhalb der Rohranordnung generierte mechanische Spannungen minimiert, sondern können auch durch die Biegeschwingungen der gebogenen Meßrohre innerhalb der Rohranordnung allfällig induzierte, im wesentlichen senkrecht zur Schnittlinie der beiden vorgenannten gedachten Längsschnittebenen wirkende Querkräfte weitgehend neutralisiert werden, nicht zuletzt auch jene, u.a. auch in den eingangs erwähnten EP-A 1 248 084 und US-B 73 50 421 erwähnten, Querkräfte, die im wesentlichen senkrecht zur ersten gedachten Längsschnittebene XZ gerichtet sind.

Zur weiteren Symmetrisierung des Meßaufnehmers und insoweit auch zur weiteren Vereinfachung von dessen Aufbau sind die beiden Strömungsteiler 20₁, 20₂ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung 20_{1A} des ersten Strömungsteilers 20₁ mit der ersten Strömungsöffnung 20_{2A} des zweiten Strömungsteilers 20₂ imaginär verbindende gedachte erste Verbindungsachse Z₁ des Meßaufnehmers parallel zu einer die zweite Strömungsöffnung 20_{1B} des ersten Strömungsteilers 20₁ mit der zweiten Strömungsöffnung 20_{2B} des zweiten Strömungsteilers 20₂ imaginär verbindende gedachten zweiten Verbindungsachse Z₂ des Meßaufnehmers verläuft, und daß eine die dritte Strömungsöffnung 20_{1C} des ersten Strömungsteilers 20₁ mit der dritten Strömungsöffnung 20_{2C} des zweiten Strömungsteilers 20₂ imaginär verbindende gedachte dritten Verbindungsachse Z₃ des Meßaufnehmers parallel zu einer die vierte Strömungsöffnung 20_{1D} des ersten Strömungsteilers 20₁ mit der vierten Strömungsöffnung 20_{2B} des zweiten Strömungsteilers 20₂ imaginär verbindende gedachten vierten Verbindungsachse Z₄ des Meßaufnehmers verläuft. Wie in der Fig. 4a und 4b gezeigte, sind die Strömungsteiler ferner so ausgebildet und im Meßaufnehmer so angeordnet, daß die Verbindungsachsen Z₁, Z₂, Z₃, Z₄ auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler 20₁, 20₂ zudem auch so ausgebildet und so im Meßaufnehmer angeordnet sein, daß eine erste gedachte Längsschnittebene XZ₁ des Meßaufnehmers, innerhalb der die erste gedachte Verbindungsachse Z₁ und die zweite gedachte Verbindungsachse Z₂ verlaufen, parallel zu einer zweiten gedachten Längsschnittebene XZ₂ des Meßaufnehmers ist, innerhalb der die gedachte dritte Verbindungsachse Z₃ und die gedachte vierte Verbindungsachse Z₄ verlaufen.

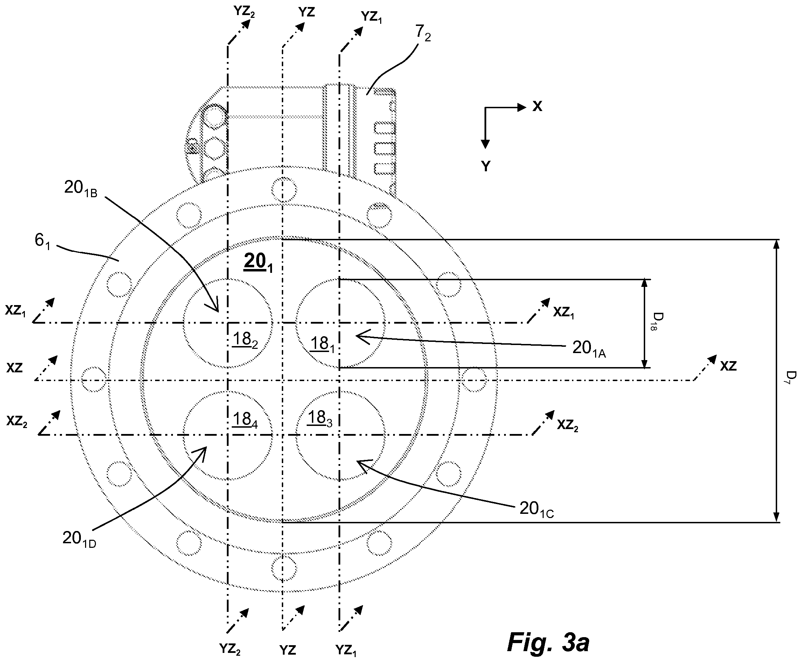

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene XZ₁ des Meßaufnehmers und der vorgenannten zweiten gedachten Längsschnittebene XZ₂ des Meßaufnehmers liegt, beispielsweise auch so, daß die erste Längsschnittebene XZ der Rohranordnung parallel zur ersten und zweiten Längsschnittebene XZ₁,XZ₂ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene YZ₁ des Meßaufnehmers und der vierten gedachten Längsschnittebene YZ₂ des Meßaufnehmers verläuft, etwa derart, daß die zweite gedachte Längsschnittebene YZ der Rohranordnung parallel zur dritten gedachten Längsschnittebene YZ₁des Meßaufnehmers und parallel zur vierten gedachten Längsschnittebene YZ₂ des Meßaufnehmers ist.

Die Meßrohre 18₁, 18₂, 18₃, 18₄ bzw. die damit gebildete Rohranordnung des Meßaufnehmers 11 sind, wie aus der Zusammenschau der Fign. 1, 2 und 4a ohne weiteres ersichtlich vom Aufnehmer-Gehäuse 7₁ dabei praktisch vollständig umhüllt. Das Aufnehmer-Gehäuse 7₁ dient insoweit also nicht nur als Tragegestell oder Halterung der Meßrohre 18₁, 18₂, 18₃, 18₄ sondern darüber hinaus auch dazu, diese, wie auch weitere innerhalb des Aufnehmer-Gehäuse 7₁ plazierte Komponenten des Meßaufnehmers, vor äußeren Umwelteinflüssen, wie z.B. Staub oder Spritzwasser, zu schützen. Überdies kann das Aufnehmer-Gehäuse 7₁ ferner auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Meßgerät-Elektronik 12 im Betrieb intern erzeugten Betriebsparametern erfaßt und signalisiert werden können. Als Material für das Aufnehmer-Gehäuse 7₁ können demnach im besondern Stähle, wie etwa Baustahl bzw. rostfreier Stahl, oder auch andere geeignete bzw. üblicherweise hierfür geeignete hochfeste Werkstoffe verwendet werden.

Nach einer Ausgestaltung der Erfindung sind die vier Meßrohre 18₁, 18₂, 18₃, 18₄ ferner so ausgebildet und so im Meßaufnehmer 11 eingebaut, daß zumindest die minimalen Biegeschwingungs-Resonanzfrequenzen f₁₈₁, f₁₈₂ des ersten und zweiten Meßrohrs 18₁, 18₂ im wesentlichen gleich sind und zumindest die minimalen Biegeschwingungs-Resonanzfrequenzen f₁₈₃, f₁₈₄ des dritten und vierten Meßrohrs 18₃, 18₄ im wesentlichen gleich sind.

Nach einer weiteren Ausgestaltung der Erfindung sind zumindest das erste und das zweite Meßrohr 18₁, 18₂ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Nach einer weiteren Ausgestaltung der Erfindung ist hierbei ferner vorgesehen, sowohl das dritte Meßrohr als auch das vierte Meßrohr so auszubilden, daß beide Meßrohre hinsichtlich ihrer jeweiligen geometrischen Rohr-Abmessungen, insb. einer Meßrohrlänge, einer Rohrwandstärke, eines Rohr-Außendurchmessers und/oder eines Kalibers, verschieden sind vom ersten Meßrohr und vom zweiten Meßrohr, insb. derart, daß die minimalen Biegeschwingungs-Resonanzfrequenzen der vier Meßrohre lediglich paarweise gleich sind. Durch die somit geschaffene Symmetriebrechung bei den vier Meßrohren 18₁, 18₂, 18₃, 18₄ können u.a. die Empfindlichkeit, das Schwingungsverhalten, insb. die mechanischen Eigenfrequenzen, und/oder die Querempfindlichkeit auf die primäre Messung beeinflussende Störgrößen, wie etwa eine Temperatur- oder Druckverteilung, die Beladung des Medium mit Fremdstoffen etc., der beiden insoweit voneinander verschiedenen zwei Meßrohrpaare 18₁, 18₂ bzw. 18₃, 18₄ gezielt aufeinander abgestimmt und somit eine verbesserte Diagnose des Meßaufnehmers im Betrieb ermöglicht werden. Selbstverständlich können die die vier Meßrohre 18₁, 18₂, 18₃, 18₄, falls erforderlich, hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, aber auch baugleich realisiert sein, insb. derart, daß im Ergebnis die minimalen Biegeschwingungs-Resonanzfrequenzen aller vier - leeren oder gleichmäßig von einem homogenen Medium durchströmten - Meßrohre 18₁, 18₂, 18₃, 18₄ im wesentlichen gleich sind.

Als Material für die Rohrwände der Meßrohre wiederum eignet sich im besonderen Titan, Zirkonium oder Tantal. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Für die meisten Anwendungen der industriellen Meßtechnik, insb. auch in der petrochemischen Industrie, würden daher auch Meßrohre aus rostfreiem Stahl, beispielsweise auch Duplexstahl oder Superduplexstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten Rechteck oder eines gedachten Quadrats, bilden, wobei nämliche Querschnittsflächen wiederum in einer gemeinsamen gedachten, senkrecht zu einer - beispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Rechtecks bzw. Quadrats bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen. Im Ergebnis dessen bildet eine Einhüllende der vier Meßrohre 18₁, 18₂, 18₃, 18₄ praktisch einen geraden, beispielsweise um die erwähnte Hauptströmungsachse bzw. Längsachse L des Meßaufnehmers, rotationssymmetrischen Körper mit einer eine zumindest zweizählige Symmetrie aufweisenden, rechteck- oder auch quadratähnlichen Grundfläche, wodurch der Platzbedarf der mittels der vier Meßrohre 18₁, 18₂, 18₃, 18₄ gebildeten Rohranordnung in einer der Kompaktheit des Meßaufnehmers 11 insgesamt förderlichen Weise minimiert werden kann.

Nach einer weiteren Ausgestaltung der Erfindung ist jedes der Meßrohre ferner so im Meßaufnehmer angeordnet, daß ein kleinster seitlicher Abstand jedes der vier Meßrohre von einer Gehäuseseitenwand des Aufnehmer-Gehäuses jeweils größer als Null, insb. aber größer als 3 mm und/oder größer als ein Doppeltes einer jeweiligen Rohrwandstärke, ist bzw. daß ein kleinster seitlicher Abstand zwischen zwei benachbarten Meßrohren jeweils größer als 3 mm und/oder größer als die Summe von deren jeweiligen Rohrwandstärken ist. Dementsprechend ist ferner jede der Strömungsöffnungen so angeordnet, daß ein kleinster seitlicher Abstand jeder der Strömungsöffnungen von einer Gehäuseseitenwand des Aufnehmer-Gehäuses 7₁ jeweils größer als Null, insb. größer als 3 mm und/oder größer als ein Doppeltes einer kleinsten Rohrwandstärke der Meßrohre 18₁, 18₂, 18₃, 18₄, ist bzw. daß ein kleinster seitlicher Abstand zwischen den Strömungsöffnungen größer als 3 mm und/oder größer als ein Doppeltes einer kleinsten Rohrwandstärke der Meßrohre 18₁, 18₂, 18₃, 18₄ ist. Dafür sind gemäß einer weiteren Ausgestaltung der Erfindung die vier Meßohre 18₁, 18₂, 18₃, 18₄ und das Aufnehmergehäuse 7₁ aufeinander abgestimmt so bemessen, daß ein Gehäuse-zu-Meßrohr-Innendurchmesser-Verhältnis des Meßaufnehmers, definiert durch ein Verhältnis des größten Gehäuse-Innendurchmessers zu einem Kaliber zumindest des ersten Meßrohrs größer als 3, insb. größer als 4 und/oder kleiner als 10, ist. Alternativ oder in Ergänzung sind die Meßrohre gemäß einer weiteren Ausgestaltung der Erfindung so gebogen und so angeordnet, daß ein Kaliber-zu-Höhe-Verhältnis der Rohranordnung, definiert durch ein Verhältnis des Kalibers, D₁₈, zumindest des ersten Meßrohrs zu einer maximalen seitlichen Ausdehnung der Rohranordnung, gemessen von einem Scheitelpunkt des ersten Meßrohrs zu einem Scheitelpunkt des dritten Meßrohrs, mehr als 0.1, insb. mehr als 0.2 und/oder weniger als 0.35, beträgt.

Wie bereits eingangs erwähnt, werden beim Meßaufnehmer 11 die für die Messung erforderlichen Reaktionskräfte im jeweils zu messenden Medium durch das Schwingenlassen der Meßrohre 18₁, 18₂, 18₃, 18₄ im sogenannten Nutzmode bewirkt. Dafür umfaßt der Meßaufnehmer ferner eine mittels wenigstens eines auf die Meßrohre 18₁, 18₂, 18₃, 18₄ einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im sogenannten Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger dient hierbei im besonderen dazu, eine, von einer entsprechenden Meß- und Betriebsschaltung z.B. des oben genannten Coriolis-Massedurchflußmessers eingespeiste, elektrische Erregerleistung P_{exc} in solche, z.B. pulsierenden oder harmonischen, Erregerkräfte F_{exc} umzuwandeln, die möglichst gleichzeitig, gleichmäßig jedoch gegensinnig auf die Meßrohre einwirken. Die Erregerkräfte F_{exc} können in dem Fachmann an und für sich bekannter Weise z.B. mittels einer in der bereits erwähnten Meß- und Betriebselektronik vorgesehenen Strom- und/ oder Spannungs-Regelschaltung, hinsichtlich ihrer Amplitude und, z.B. mittels einer ebenfalls in Meß- und Betriebselektronik vorgesehenen Phasen-Regelschleife (PLL), hinsichtlich ihrer Frequenz eingestellt werden, vgl. hierzu beispielsweise auch die US-A 48 01 897 oder die
US-B 63 11 136.

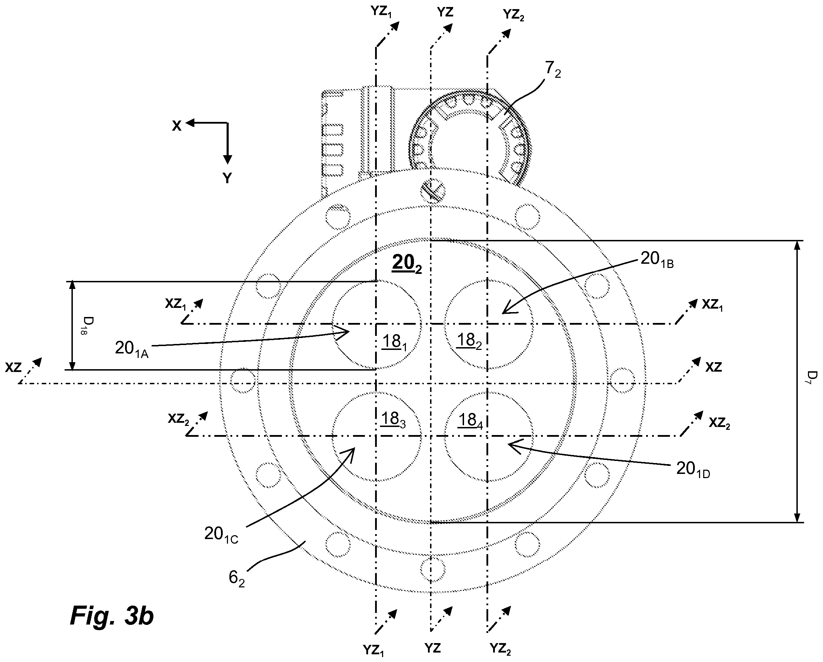

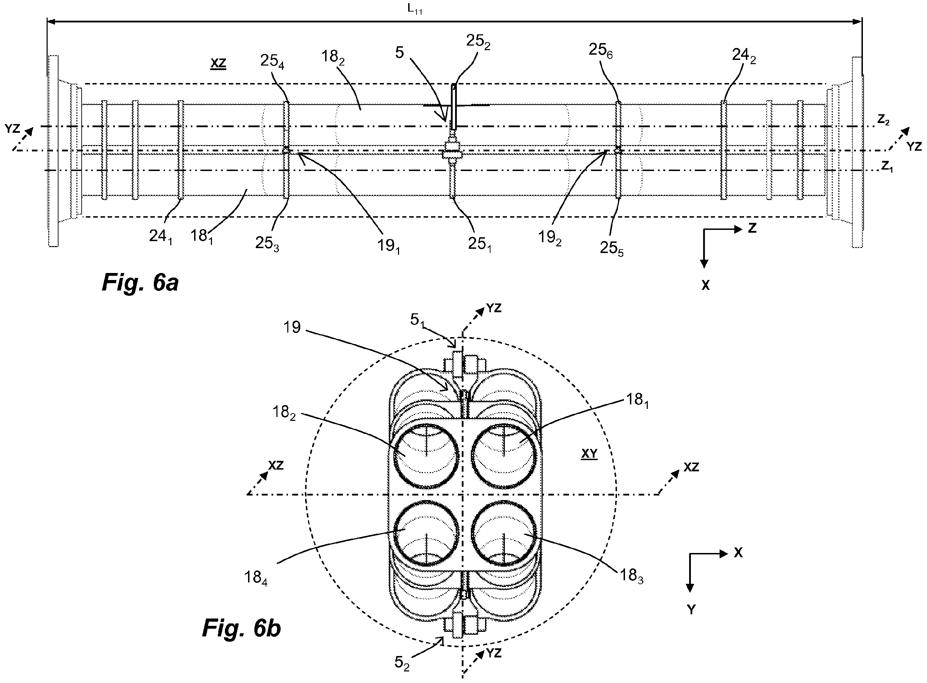

Infolge von durch die zu Schwingungen im Nutzmode angeregten Meßrohre hindurchströmendem Medium werden im Medium Corioliskräfte induziert, die wiederum eine zusätzliche, höheren Schwingungsmoden der Meßrohre, dem sogenannten Coriolismode, entsprechende Verformungen der Meßrohre bewirken. Beispielsweise können die Meßrohre 18₁, 18₂, 18₃, 18₄ im Betrieb von der daran gehalterten elektro-mechanischen Erregeranordnung zu Biegeschwingungen, insb. auf einer momentanen mechanischen Eigenfrequenz der mittels der vier Meßrohre 18₁, 18₂, 18₃, 18₄ gebildeten Rohranordnung, angeregt werden, bei denen sie - zumindest überwiegend lateral ausgelenkt und, wie aus der Zusammenschau der Fign. 3a, 3b bzw. 6a, 6b ohne weiteres ersichtlich, paarweise zueinander im wesentlichen gegenphasig schwingen gelassen werden. Dies im besonderen derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen Z₁, Z₂, Z₃, Z₄ jeweils parallele gedachte Schwingungssachse ausgebildet sind, wobei die vier Schwingungssachsen im hier gezeigten Ausführungsbeispiel gleichermaßen zueinander wie auch zu der die beiden Strömungsteiler imaginär verbindenden und durch einen Massenschwerpunkt des Meßaufnehmers gedachten Längsachse L des gesamten Meßaufnehmers parallel sind. Anders gesagt, können die Meßrohre, wie bei Meßaufnehmern vom Vibrationstyp durchaus üblich, jeweils zumindest abschnittsweise in einem Biegeschwingungsmode nach der Art einer beidseitig eingespannten Saite bzw. nach Art eines endseitig eingespannten Auslegers schwingen gelassen werden.

Gemäß einer weiteren Ausgestaltung der Erfindung sind die Meßrohre 18₁, 18₂, 18₃, 18₄ mittels der Erregeranordnung 5 im Betrieb zumindest anteilig, insb. überwiegend, zu Biegeschwingungen angeregt, die eine Biegeschwingungsfrequenz aufweisen, die in etwa gleich einer momentanen mechanischen Resonanzfrequenz der die vier Meßrohre 18₁, 18₂, 18₃, 18₄ umfassenden Rohranordnung ist oder die zumindest in der Nähe einer solchen Eigen- oder Resonanzfrequenz liegt. Die momentanen mechanischen Biegeschwingungsresonanzfrequenzen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf Biegeschwingungsresonanzfrequenz kann einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf einer gemeinsamen natürlichen mechanischen Eigenfrequenz, schwingen gelassen. Darüber hinaus ist vorgesehen die im wesentlichen frequenzgleich schwingen gelassenen Meßrohre 18₁, 18₂, 18₃, 18₄ so anzuregen, daß zumindest bei nicht strömendem Medium das erste und dritte Meßrohr 18₁, 18₃ zueinander im wesentlichen synchron schwingen, d.h. mit im wesentlichen gleicher Schwingungsform, im wesentlichen gleicher Phasenlage und etwa gleicher Schwingungsamplitude. In dazu analoger Weise werden bei dieser Ausgestaltung der Erfindung auch das zweite und vierte Meßrohr 18₂, 18₄ zueinander im wesentlichen synchron schwingen gelassen.

Die Erregeranordnung ist gemäß einer Ausgestaltung der Erfindung derart ausgebildet, daß damit das erste Meßrohr 18₁ und das zweite Meßrohr 18₂ im Betrieb zu gegenphasigen Biegeschwingungen und das dritte Meßrohr 18₃ und das vierte Meßrohr 18₄ im Betrieb gegenphasige Biegeschwingungen anregbar sind. Gemäß der Erfindung ist die Erregeranordnung 5 dafür mittels eines, insb. elektrodynamischen und/oder Schwingungen des ersten Meßrohrs 18₁ relativ zum zweiten Meßrohr 18₂ differentiell anregenden, ersten Schwingungserregers 5₁ gebildet.

Ferner ist vorgesehen, daß als erster Schwingungserreger 5₁ ein simultan, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist. Erfindungsgemäß umfaßt die Erregeranordnung ferner einen, insb. elektrodynamischen und/oder zum ersten Schwingungserreger 5₁ baugleichen und/oder Schwingungen des dritten Meßrohrs 18₃ relativ zum vierten Meßrohr 18₄ differentiell anregenden, zweiten Schwingungserreger 5₂. Die beiden Schwingungserreger können in vorteilhafter Weise elektrisch seriell verschaltet sind, insb. derart, daß ein gemeinsames Treibersignal gemeinsame Schwingungen des ersten und dritten Meßrohrs 18₁, 18₃ relativ zum zweiten und vierten Meßrohr 18₂, 18₄ anregt. Gemäß einer weiteren Ausgestaltung ist der der zweite Schwingungserreger 5₂ mittels eines am dritten Meßrohr gehalterten Permanentmagneten und einer von dessen Magnetfeld durchfluteten, am vierten Meßrohr gehalterten Zylinderspule gebildet.

Wie u.a. auch in den Fig. 4a, 4b, oder 6b dargestellt, kann der erste Schwingungserreger 5₁ in oberhalb des ersten und zweiten Meßrohrs 18₁, 18₂ und insoweit auch oberhalb eines Schwerpunkts der Rohranordnung angeordnet sein, der in einer durch die Einbaustelle nämlichen Schwingungserregers hindurchgehenden gedachten - hier zur ersten gedachten Längsschnittebene XZ und der zweiten gedachten Längsschnittebene YZ der Rohranordnung jeweils senkrechten - Querschnittsebene XY der Rohranordnung liegt. Im hier gezeigten Ausführungsbeispiel ist die Rohranordnung zudem auch spiegelsymmetrisch bezüglich vorgenannter gedachter Querschnittsebene XY. Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Meßaufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel zu einer zur Längsachse L senkrechten gedachten Querachse Q des Meßaufnehmers und eine gemeinsame Schnittlinie der zweiten Längsschnittebene YZ und der Querschnittsebene XY parallel zu einer zur Längsachse L senkrechten gedachten Hochachse H des Meßaufnehmers sind.

Es sei an dieser Stelle zudem ferner noch erwähnt, daß, obgleich die Schwingungserreger der im Ausführungsbeispiel gezeigten Erregeranordnung jeweils etwa mittig an den Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2, 4a, 4b, 5a, und 5b jeweils ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Sensoranordnung 19 zum Erzeugen von Vibrationen, insb. Biegeschwingungen, der Meßrohre repräsentierenden Schwingungsmeßsignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweites Schwingungsmeßsignal liefern. Dies im besonderen in der Weise, daß wenigstens zwei der von der Sensoranordnung 19 gelieferten Schwingungsmeßsignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Meßgerät-Elektronik 12 können desweiteren der erste und dritte Schwingungssensor 19₁, 19₃ elektrisch seriell verschaltet sein, beispielsweise derart, daß ein gemeinsames Schwingungsmeßsignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungsmeßsignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren, Drucksensoren und/oder Temperatursensoren, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können. Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt.

Die Erregeranordnung 5 und die Sensoranordnung 19 sind ferner, wie bei derartigen Meßaufnehmern üblich, in geeigneter Weise mit einer in der Meßgerät-Elektronik entsprechend vorgesehenen der Meß- und Betriebsschaltung gekoppelt, beispielsweise drahtgebunden mittels entsprechender Kabelverbindungen. Die Meß- und Betriebsschaltung wiederum erzeugt einerseits ein die Erregeranordnung 5 entsprechend treibendes, beispielsweise hinsichtlich eines Erregerstromes und/oder einer Erregerspannung geregeltes, Erregersignal. Andererseits empfängt die Meß- und Betriebsschaltung die Schwingungsmeßsignale der Sensoranordnung 19 und generiert daraus gewünschte Meßwerte, die beispielsweise eine Massedurchflußrate, einen totalisierten Massendurchfluß, eine Dichte und/oder eine Viskosität des zu messenden Mediums repräsentieren können und die ggf. vor Ort angezeigt und/oder auch an ein dem In-Line-Meßgerät übergeordnetes Datenverarbeitungssystem inform digitaler Meßdaten gesendet und daselbst entsprechend weiterverarbeitet werden können. Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebselektroniken verwendet werden können, wie sie beispielsweise bereits in herkömmlichen Coriolis-Massedurchfluß-/ Dichtemeßgeräten breite Anwendung gefunden haben.

Die Meßgerät-Elektronik 12 einschließlich der Meß- und Betriebsschaltung kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Meßgerät-Elektronik 12 angeordnet sein.

Wie bereits mehrfach erwähnt ist das In-Line-Meßgerät und insoweit auch der Meßaufnehmer 11 im besonderen für Messungen auch hoher Massendurchflüsse von mehr als 1000 t/h in einer Rohrleitung von großem Kaliber von mehr als 250 mm vorgesehen. Dem Rechnung tragend ist die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie größer als 100 mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 40 mm beträgt. Im besonderen sind die Meßrohre 18₁, 18₂, 18₃, 18₄ ferner so ausgebildet, das jedes ein Kaliber D₁₈ von mehr als 60 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre 18₁, 18₂, 18₃, 18₄ dabei so ausgelegt, daß deren Meßrohrlänge L₁₈ jeweils größer als 1200 mm ist. Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann dann die die vier Meßrohre 18₁, 18₂, 18₃, 18₄ umfassende Rohranordnung zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂, 18₃, 18₄ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein.

Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/ D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/ D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten.

Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/ L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/ L₁₁ des Meßaufnehmers, definiert durch ein Verhältnis der oben bezeichnten Meßrohrlänge L₁₈ zumindest des ersten Meßrohrs zur Einbaulänge L₁₁ des Meßaufnehmers, mehr als 0.7, insb. mehr als 0.8 und/oder weniger als 0.95, beträgt.

Falls erforderlich, können allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig zumindest paarweise jeweils mittels als sogenannte Knotenplatten dienenden Kopplerelemente - im folgenden Kopplerelemente erster Art - miteinander mechanisch verbunden sind. Darüber hinaus können mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen der mittels der vier Meßrohre gebildeten Rohranordnung, einschließlich daran angebrachter weiterer Komponenten des Meßaufnehmers, und insoweit auch das Schwingungsverhalten des Meßaufnehmers insgesamt gezielt beeinflußt werden.

Die als Knotenplatten dienenden Kopplerelemente erster Art können beispielsweise dünne, insb. aus demselben Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂, 18₃ bzw. 18₄ aufgeklemmt und ggf. hernach noch mit dem jeweiligen Meßrohr, beispielsweise durch Hartverlöten oder Schweißen, stoffschlüssig verbunden werden können.

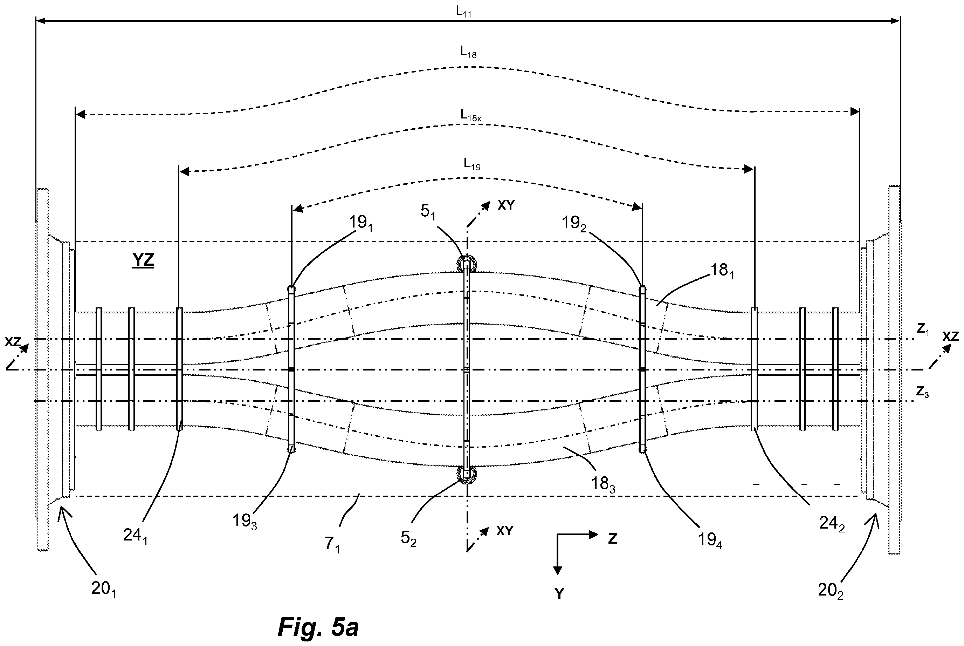

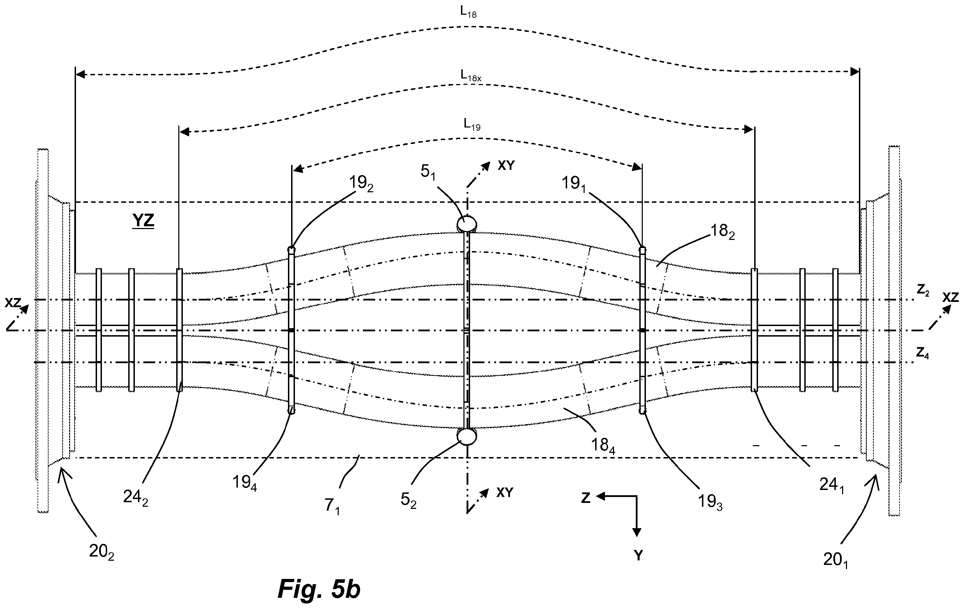

Dementsprechend umfaßt die Rohranordnung gemäß einer weiteren Ausgestaltung der Erfindung ein erstes Kopplerelement 24₁ erster Art, das zum Bilden von einlaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, sowie ein, insb. zum ersten Kopplerelement baugleiches, zweites Kopplerelement 24₂ erster Art, das zum Bilden von auslaßseitigen Schwingungsknoten zumindest für Vibrationen, insb. Biegeschwingungen, des ersten Meßrohrs 18₁ und für dazu gegenphasige Vibrationen, insb. Biegeschwingungen, des zweiten Meßrohrs 18₁ sowohl vom ersten Strömungsteiler 20₁ als auch vom zweiten Strömungsteiler 20₂ wie auch vom ersten Kopplerelement 24₁ beabstandet auslaßseitig zumindest am ersten Meßrohr 18₁ und am zweiten Meßrohr 18₂ fixiert ist. Wie u.a. aus Fig. 4a, 4b bzw. 5a, 5b ohne weiteres ersichtlich, sind das erste Kopplerelement 24₁ erster Art zum Bilden von einlaßseitigen Schwingungsknoten auch für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig auch am dritten Meßrohr 18₃ und am vierten Meßrohr 18₄ und das zweite Kopplerelement 24₂ erster Art zum Bilden von auslaßseitigen Schwingungsknoten zumindest für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ wie auch vom ersten Kopplerelement 24₁ beabstandet auslaßseitig auch am dritten Meßrohr 18₃ und am vierten Meßrohr 18₄ fixiert, so daß im Ergebnis alle vier Meßrohre 18₁, 18₂, 18₃, 18₄ mittels des ersten Kopplerelements 24₁ erster Art sowie mittels des zweiten Kopplerelements 24₂ erster Art miteinander mechanisch verbunden sind. Jedes der beiden vorgenannten, insb. einander baugleichen, Kopplerelemente 24₁, 24₂ erster Art ist gemäß einer weiteren Ausgestaltung der Erfindung plattenförmig ausgebildet, insb. in derart, daß es, wie auch aus der Zusammenschau der Figuren ohne weiteres ersichtlich, eine eher rechteckförmige oder auch quadratische, Grundfläche oder aber daß es eher eine runde, eine ovale, eine kreuzförmig oder, wie beispielsweise auch in der US-A 2006/0283264 vorgeschlagen, eine eher H-förmige Grundfläche aufweist. Wie u.a. aus den Fig. 4a, 4b bzw. 5a, 5b ohne weiteres ersichtlich, sind die beiden vorgenannten Kopplerelemente 24₁, 24₂ ferner so ausgebildet und im Meßaufnehmer so plaziert, daß ein Massenschwerpunkt des ersten Kopplerelements 24₁ erster Art einen Abstand zu einem Massenschwerpunkt des Meßaufnehmers 11 aufweist, der im wesentlichen gleich ist mit einem Abstand eines Massenschwerpunkt des zweiten Kopplerelements 24₂ erster Art zu nämlichen Massenschwerpunkt des Meßaufnehmers 11, insb. so, daß die beiden Kopplerelemente 24₁, 24₂ im Ergebnis symmetrisch zu einer die Meßrohre 18₁, 18₂, 18₃, 18₄ jeweils in Mitte schneidenden gemeinsamen gedachten Querschnittsebene angeordnet sind.

Zur weiteren Erhöhung der Freiheitsgrade bei der Optimierung des Schwingungsverhaltens der mittels der vier Meßrohre 18₁, 18₂, 18₃, 18₄ gebildeten Rohranordnung umfaßt diese nach einer Weiterbildung der Erfindung ferner ein drittes Kopplerelement 24₃ erster Art, das zum Bilden von einlaßseitigen Schwingungsknoten zumindest für Vibrationen, insb. Biegeschwingungen, des dritten Meßrohrs 183 und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig zumindest am dritten 183 Meßrohr und am vierten Meßrohr 18₄ fixiert ist. Darüberhinaus umfaßt der Meßaufnehmer 11 bei dieser Weiterbildung ein, insb. zum dritten Kopplerelement 24₃ erster Art baugleiches, viertes Kopplerelement 24₄ erster Art, das zum Bilden von auslaßseitigen Schwingungsknoten zumindest für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 202 wie auch vom dritten Kopplerelement 24₃ erster Art beabstandet auslaßseitig zumindest am dritten Meßrohr 18₃ und am vierten Meßrohr 18₄ fixiert ist. Jedes der beiden vorgenannten, insb. einander baugleichen, dritten und vierten Kopplerelemente 24₃, 24₄ erster Art ist gemäß einer weiteren Ausgestaltung der Erfindung wiederum plattenförmig ausgebildet, insb. in derart, daß es eine rechteckförmige, quadratische, runde, kreuzförmig oder H-förmige Grundfläche aufweist. Wie in Fig. 4a bzw. 5a, 5b dargestellt sind das dritte Kopplerelement 24₃ erster Art sowohl vom ersten Strömungsteiler 20₁ als auch vom zweiten Strömungsteiler 20₂ wie auch vom ersten Kopplerelement erster Art 24₁ beabstandet einlaßseitig auch am ersten Meßrohr 18₁ und am zweiten Meßrohr 18₂ und das vierte Kopplerelement 24₄ erster Art sowohl vom ersten Strömungsteiler als auch vom zweiten Strömungsteiler wie auch vom zweiten Kopplerelement beabstandet auslaßseitig auch am ersten Meßrohr und am zweiten Meßrohr fixiert, so daß im Ergebnis alle vier Meßrohre 18₁, 18₂, 18₃, 18₄ auch mittels des dritten Kopplerelements 24₃ erster Art sowie mittels des vierten Kopplerelements 24₄ erster Art miteinander mechanisch verbunden sind.

Wie aus der Zusammenschau der Fig. 4a, 4b, 5a, 5b ohne weiteres ersichtlich, sind auch das dritte und vierte Kopplerelemente 24₃, 24₄ ferner so ausgebildet und im Meßaufnehmer so plaziert, daß ein Massenschwerpunkt des dritten Kopplerelements 24₃ erster Art einen Abstand zum Massenschwerpunkt des Meßaufnehmers aufweist, der im wesentlichen gleich ist mit einem Abstand eines Massenschwerpunkt des vierten Kopplerelements 24₄ erster Art zu nämlichen Massenschwerpunkt des Meßaufnehmers, insb. so, daß die beiden Kopplerelemente 24₃, 24₄ im Ergebnis symmetrisch zu einer die vier Meßrohre 18₁, 18₂, 18₃, 18₄ jeweils in Mitte schneidenden gemeinsamen gedachten Querschnittsebene angeordnet sind. Ferner sind gemäß einer weiteren Ausgestaltung der Erfindung die vier Kopplerelement 24₁, 24₂, 24₃, 24₄ erster Art so im Meßaufnehmer angeordnet, daß der Abstand des Massenschwerpunkts des dritten Kopplerelements 24₃ erster Art vom Massenschwerpunkt des Meßaufnehmers größer als der Abstand des Massenschwerpunkts des ersten Kopplerelements 24₁ erster Art von nämlichem Massenschwerpunkt des Meßaufnehmers und größer als der Abstand des Massenschwerpunkt des zweiten Kopplerelements 24₂ erster Art von nämlichem Massenschwerpunkt des Meßaufnehmers ist.

Wie aus der Zusammenschau der Fign. 4a, 4b, 5a und 5b ohne weiteres ersichtlich, definieren die Rohrform jedes der Meßrohre zusammen mit einem minimaler Abstand zwischen dem dem Massenschwerpunkt des Meßaufnehmers 11 am nahesten liegenden einlaßseitig am jeweiligen Meßrohr fixierten Kopplerelement erster Art - hier also dem ersten Kopplerelement 24₁ erster Art - und dem dem Massenschwerpunkt des Meßaufnehmers am nahesten liegenden auslaßseitig an nämlichem Meßrohr fixierten Kopplerelement erster Art - hier also dem zweiten Kopplerelement 24₂ erster Art - jeweils eine freie Schwinglänge, L₁₈ₓ, selbigen Meßrohrs. Die freie Schwinglänge, L₁₈ₓ, des jeweiligen Meßrohrs entspricht hierbei, wie auch in den Fig. 5a und 5b schematisch dargestellt, einer Länge des zwischen den Kopplerelementen 24₁, 24₂ verlaufenden Abschnitts der Biegelinie des nämlichen Meßrohrs, wobei nach einer weiteren Ausgestaltung der Erfindung die Kopplerelemente erster Art so im Meßaufnehmer plaziert sind, daß im Ergebnis die freie Schwinglänge jedes der Meßrohre 18₁, 18₂, 18₃, 18₄ weniger als 3000 mm, insb. weniger als 2500 mm und/oder mehr als 800 mm, beträgt. Alternativ oder in Ergänzung ist ferner vorgesehen, die die Meßrohre so auszubilden und die Kopplerelemente erster Art so anzuordnen, daß alle vier Meßrohre 18₁, 18₂, 18₃, 18₄ im Ergebnis die gleiche freie Schwinglänge, L₁₈ₓ, aufweisen. Nach einer weiteren Ausgestaltung der Erfindung sind zu dem das erste Meßrohr und das zweite Meßrohr zumindest über den sich zwischen dem ersten Kopplerelement erster Art und dem zweiten Kopplerelement erster Art erstreckenden Bereich - mithin also deren jeweiligen freien Schwinglänge - zueinander parallel, und sind auch das dritte Meßrohr und das vierte Meßrohr zumindest über den sich zwischen dem ersten Kopplerelement erster Art und dem zweiten Kopplerelement erster Art erstreckenden Bereich - mithin also deren jeweiligen freien Schwinglänge - zueinander parallel.

Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der US-A 2006/0150750 vorgeschlagen, darüberhinaus noch weitere, dem Bilden von ein- bzw. auslaßseitigen Schwingungsknoten für Vibrationen, insb. Biegeschwingungen, des ersten Meßrohrs und für dazu gegenphasige Vibrationen, insb. Biegeschwingungen, des zweiten Meßrohrs bzw. für Vibrationen, insb. Biegeschwingungen, des dritten Meßrohrs und für dazu gegenphasige Vibrationen, insb. Biegeschwingungen, des vierten Meßrohrs dienende Kopplerelemente der vorgenannten Art aufweist, beispielsweise also insgesamt 6 oder 8 solcher Kopplerelemente erster Art.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, abgestimmt auf die erwähnte freie Schwinglänge, so bemessen, daß ein Kaliber-zu- Schwinglänge-Verhältnis D₁₈/L₁₈ₓ des Meßaufnehmers, definiert durch ein Verhältnis des Kalibers D₁₈ des ersten Meßrohrs zur freien Schwinglänge L₁₈ₓ des ersten Meßrohrs, mehr als 0.03, insb. mehr als 0.05 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/L₁₁ des Meßaufnehmers, definiert durch ein Verhältnis der freien Schwinglänge L₁₈ₓ des ersten Meßrohrs zur Einbaulänge L₁₁ des Meßaufnehmers, mehr als 0.55, insb. mehr als 0.6 und/oder weniger als 0.9, beträgt.

Nach einer weiteren Ausgestaltung der Erfindung sind die Schwingungssensoren, abgestimmt auf die freie Schwinglänge, so im Meßaufnehmer angeordnet, daß ein Meßlänge-zu-Schwinglänge-Verhältnis des Meßaufnehmers, definiert durch ein Verhältnis der erwähnten Meßlänge des Meßaufnehmers zur freien Schwinglänge des ersten Meßrohrs, mehr als 0.3, insb. mehr als 0.4 und/oder weniger als 0.95, beträgt.

Zur Schaffung eines möglichst kompakten, dennoch aber für den Massendurchfluß möglichst empfindlichen Meßaufnehmers sind nach einer weiteren Ausgestaltung der Erfindung die Schwingungssensoren, abgestimmt auf die Einbaulänge des Meßaufnehmers, so im Meßaufnehmer angeordnet, daß ein Meßlänge-zu-Einbaulänge-Verhältnis des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur erwähnten Meßlänge L₁₉ des Meßaufnehmers definiert ist, mehr als 0.05, insb. mehr als 0.09, beträgt. Gemäß einer weiteren Ausgestaltung der Erfindung ist ferner die oben erwähnte Meßlänge L₁₉ kleiner als 1200 mm gehalten.

Gemäß einer weiteren Ausgestaltung der Erfindung ist ferner vorgesehen, die Meßrohre 18₁, 18₂, 18₃, 18₄ im Betrieb paarweise synchron, also mit gleicher Phasenlage, und insoweit die Schwingungen aller vier Meßrohre 18₁, 18₂, 18₃, 18₄ aufeinander entsprechend abzugleichen, daß die Meßrohre lediglich paarweise außerphasig schwingen gelassen sind. In vorteilhafter Weise sind das Schwingungsverhalten der mittels der vier Meßrohre 18₁, 18₂, 18₃, 18₄ gebildeten Rohranordnung wie auch die die Erregeranordnung steuernden Treibersignale so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ zueinander im wesentlichen gegenphasig, also mit einer gegenseitigen Phasenverschiebung von etwa 180°, schwingen und auch das dritte und das vierte Meßrohr 18₃, 18₄ zueinander im wesentlichen gegenphasig schwingen, während gleichzeitig das erste und dritte Meßrohr 18₁, 18₃ zueinander im wesentlichen phasengleich schwingen und das zweite und vierte Meßrohr 18₂, 18₄ zueinander im wesentlichen phasengleich schwingen.

Daher umfaß die Rohranordnung gemäß einer weiteren Ausgestaltung der Erfindung ferner ein, z.B. plattenförmiges, erstes Kopplerelement 25₁ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art beabstandet lediglich am ersten Meßrohr 18₁ und am dritten Meßrohr 18₃ fixiert ist. Desweiteren umfaßt die Rohranordnung zumindest bei dieser Ausgestaltung der Erfindung wenigstens ein, z.B. plattenförmiges, zweites Kopplerelement 252 zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten Kopplerelement 24₁ erster Art als auch vom zweiten Kopplerelement 24₁ erster Art wie auch vom ersten Kopplerelement 25₁ zweiter Art beabstandet lediglich am zweiten Meßrohr 18₂ und am vierten Meßrohr 18₄ fixiert ist. Wie aus der Zusammenschau der Fig. 4a, 4b, 5a und 5b ohne weiteres ersichtlich, sind das erste und zweite Kopplerelement 25₁, 25₂ zweiter Art möglichst einander gegenüberliegend im Meßaufnehmer 11 plaziert.

Ein Vorteil der mechanischen Kopplung der Meßrohre in der vorbeschriebenen Weise ist u.a. zu sehen, daß die vier Meßrohre 18₁, 18₂, 18₃, 18₄ zu zwei jeweils effektiv als ein Schwingungssystem wirkenden Meßrohr-Verbunden reduziert werden, die jeder für sich praktisch wie ein einziges Meßrohr wirken, da die von der Erregeranordnung 5 erzeugten Erregerkräfte aufgrund der mechanischen Kopplung sowohl zwischen dem ersten und dem zweiten Meßrohr 18₁, 18₂ als auch gleichermaßen zwischen dem dritten und vierten Meßrohr 18₃, 18₄ wirken bzw. auch die zum Zwecke der Messung im hindurchströmenden Medien verursachten Reaktionskräfte jeweils gemeinsam auf die Schwingungssensoren der Sensoranordnung 5 zurück übertragen werden. Des weiteren können allfällige Unterschiede zwischen den einzelnen Meßrohren 18₁, 18₂, 18₃, 18₄ hinsichtlich deren nominellen Schwingungsverhaltens, z.B. infolge ungleichmäßiger Strömung, unterschiedlicher Temperatur- und/oder unterschiedlicher Dichteverteilung etc., auf sehr einfache Weise ausgeglichen werden. Die Verwendung von Kopplerelementen zweiter Art hat ferner auch den Vorteil, daß jeder die somit auf sehr einfache Weise gebildeten zwei Meßrohr-Verbunde nicht nur für die Erreger- sondern gleichermaßen auch für die Sensoranordnung 19 und insoweit auch für die Meß- und Betriebsschaltung der Meßgerät-Elektronik 12 insgesamt praktisch jeweils als ein einziges Meßrohr wirkt und der Meßaufnehmer 11 insoweit aus Sicht der Meß- und Betriebsschaltung scheinbar lediglich zwei gegeneinander schwingen gelassenen Meßrohre aufweist. Infolge dessen kann zumindest für die Vorverarbeitung und allfällige Digitalisierungen der Schwingungsmeßsignale bewährte Signalverarbeitungstechnologien und auch bewährte, insb. zweikanalige, also von lediglich zwei Schwingungssensoren gelieferte Schwingungsmeßsignale verarbeitende, Meßschaltungen aus dem Bereich der Coriolis-Massendurchfluß- bzw. der Dichtemessung zurückgegriffen werden. Gleichermaßen kann somit auch für die die Erregeranordnung treibende Betriebsschaltung ohne weiteres dem Fachmann bekannte, insb. auf einkanalige, also genau ein Treibersignal für die Erregeranordnung liefernde, Treibererschaltungen verwendet werden. Falls erforderlich, können aber auch die von den zwei oder mehr Schwingungssensoren jeweils gelieferten Schwingungsmeßsignale aber auch einzeln in jeweils separaten Meßkanälen vorverarbeitet und entsprechend digitalisiert werden; gleichermaßen können, falls erforderlich, auch die ggf. vorhandenen zwei oder mehr Schwingungserreger mittels separaten Treibersignalen separat angesteuert werden.

Falls erforderlich - beispielsweise weil der Meßaufnehmer für die Messung extrem heißer Medien bzw. für die Messung in Anwendungen mit über einen weiten Bereich schwankender Betriebstemperatur, etwa infolge wiederkehrend in-situ durchgeführten Reinigungsvorgängen des Meßaufnehmers ("cleaning in process", "sterilizing in process") vorgesehen ist und insoweit nennenswerte thermische Ausdehnungen der Meßrohre zu erwarten sind - können die Kopplerelemente zweiter Art ferner so ausgebildet sein, daß sie sich im wesentlichen gleichermaßen ausdehnen, wie die Meßrohre und/oder daß sie zumindest gegenüber von Kräften, die in Richtung einer durch die Scheitelpunkte der beiden durch das jeweilige Kopplerelemente zweiter Art miteinander verbundenen Meßrohre verlaufenden oder dazu parallelen Wirkungslinie ausreichend nachgiebig sind. Letzteres kann beispielsweise durch entsprechend in das jeweilige Kopplerelement eingeformte - hier jeweils im wesentlichen quer zu vorgenannter Wirkungslinie verlaufende - Schlitze oder aber auch durch Verwendung dünner Platten bzw. Stäbe als Kopplerelement zweiter Art realisiert werden. Im Ergebnis ist so auch eine geringfügige relative Bewegung der beiden mittels des jeweiligen Kopplerelements zweiter Art verbunden Meßrohre möglich, wodurch die gebogenen Meßrohre - falls für die spezielle Anwendung erforderlich - im Nutzmode jeweils auch zu typischen Biegeschwingungen nach Art eines endseitig eingespannten Auslegers angeregt werden können.

Nach einer Ausgestaltung der Erfindung sind die Meßrohre 18₁, 18₂, 18₃, 18₄ sowie die diese miteinander verbindenden Kopplerelementen daher ferner so geformt und miteinander mittels Kopplerelementen zweiter Art, ggf. zusätzlich auch mittels Kopplerelementen erster Art, so mechanisch gekoppelt, daß ein durch das erste und das dritte Meßrohr 18₁, 18₃ gebildeter erster Meßrohr-Verbund und ein durch das zweite und das vierte Meßrohr 18₂, 18₄ gebildeter zweiter Meßrohr-Verbund im wesentlichen die gleichen mechanischen Eigenfrequenzen aufweisen.

Im hier gezeigten Ausführungsbeispiel ist das erste Kopplerelement 25₁ zweiter Art im Bereich von 50% eines minimaler Abstand zwischen dem ersten Kopplerelement 24₁ erster Art und dem zweiten Kopplerelement 24₂ erster Art am ersten bzw. dritten Meßrohr 18₁, 18₃ fixiert - insoweit also bei etwa der halben freien Schwinglänge des ersten bzw. dritten Meßrohrs 18₁, 18₃. Ferner ist auch das zweite Kopplerelement zweiter Art in entsprechender Weise im Bereich von 50% eines minimaler Abstand zwischen dem ersten Kopplerelement 24₁ erster Art und dem zweiten Kopplerelement 24₂ erster Art am zweiten bzw. vierten Meßrohr 18₂, 18₄ fixiert, also etwa bei der halben freien Schwinglänge des zweiten bzw. vierten Meßrohrs 18₂, 18₄.

In vorteilhafter Weise können die Kopplerelemente zweiter Art zusätzlich auch als Halterung von Komponenten der Erregeranordnung 5 dienen. Daher ist nach einer weiteren Ausgestaltung der Erfindung vorgesehen, daß jeder der, insb. baugleichen bzw. gleichschweren, Schwingungserreger 5₁, 5₂ anteilig jeweils an zwei einander gegenüberliegenden Kopplerelementen zweiter Art - - hier dem ersten und zweiten Kopplerelement 25₁, 25₂ - gehaltert ist. Somit kann auf sehr effektive, gleichwohl sehr einfache Weise sichergestellt werden, daß die mittels des Schwingungserregers 5₁ generierte Erregerkraft zumindest überwiegend synchrone, insb. auch einander im wesentlichen phasengleiche, Biegeschwingungen des ersten und dritten Meßrohr 18₁, 18₃ bzw. des zweiten und vierten Meßrohrs 18₂, 18₄ bewirkt. Beispielsweise können im Falle elektro-dynamischer Schwingungserreger die jeweilige Zylinderspule am ersten und der jeweils zugehörige Permanentmagnet am gegenüberliegenden zweiten Kopplerelement zweiter Art fixiert sein. Für den erwähnten Fall, daß die Erregeranordnung 5 zwei, insb. möglichst gleichschwere, Schwingungserreger 5₁, 5₂ aufweist können sowohl der erste Schwingungserreger 5₁ als auch der zweite Schwingungserreger 5₂ jeweils am ersten und zweiten Kopplerelement 25₁, 25₂ zweiter Art gehaltert sein, beispielsweise auch in der Weise, daß, wie aus den Fig. 4 bzw. 5a ohne weiteres ersichtlich, ein minimaler Abstand zwischen dem ersten und zweiten Schwingungserreger 5₁,5₂ mehr als dreimal so groß wie ein Rohr-Außendurchmessers der Meßrohre 18₁, 18₂, 18₃, 18₄, zumindest aber des ersten Meßrohrs 18₁, jedoch insgesamt möglichst klein gehalten ist, um so ein optimale Ausnutzung des im Innenraum des Aufnehmer-Gehäuses 7₁ angeboten Platzes wie auch eine einfache Montage der Schwingungserreger 5₁,5₂ zu ermöglichen. Alternativ zur Verwendung eines am ersten und zweiten Kopplerelement 25₁, 25₂ zweiter Art gehalterten zweiten Schwingungserregers 5₂ oder in Ergänzung dazu können, wie beispielsweise auch in der eingangs erwähnten US-A 2007/0151368 gezeigt, zwecks Vermeidung von unerwünschten Torsionsmomenten, insb. um die Längsachse L, aber auch entsprechende Ausgleichsmassen an den beiden Kopplerelementen angebracht sein.

Nach einer weiteren Ausgestaltung der Erfindung umfaßt der Meßaufnehmer ferner ein, beispielsweise wiederum plattenförmiges oder stabförmiges, drittes Kopplerelement 25₃ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art wie auch vom ersten Kopplerelement 25₁ zweiter Art beabstandet lediglich am ersten Meßrohr 18₁ und am dritten Meßrohr 18₃ fixiert ist, sowie ein, insb. plattenförmiges oder stabförmiges, viertes Kopplerelement 25₄ zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten und zweiten Kopplerelement erster Art als auch vom zweiten und dritten Kopplerelement zweiter Art jeweils beabstandet lediglich am zweiten Meßrohr 18₂ und am vierten Meßrohr 18₄ fixiert ist. Das dritte und vierte Kopplerelement 25₃, 25₄ zweiter Art sind, wie aus der Zusammenschau der Fig. 4a, 4b, 5a, 5b und 6a ohne weiteres ersichtlich, vorzugsweise einander gegenüberliegend im Meßaufnehmer 11 plaziert.

Ferner umfaßt der Meßaufnehmer 11 gemäß einer weiteren Ausgestaltung der Erfindung ein, insb. plattenförmiges oder stabförmiges, fünftes Kopplerelement 25₅ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten und zweiten Kopplerelement erster Art als auch vom ersten und dritten Kopplerelement zweiter Art beabstandet lediglich am ersten Meßrohr 18₁ und am dritten Meßrohr 18₂ fixiert ist, sowie ein, insb. plattenförmiges oder stabförmiges, sechstes Kopplerelement 25₆ zweiter Art, das zum Synchronisieren von Vibrationen, insb. Biegeschwingungen, des zweiten Meßrohrs und von dazu frequenzgleichen Vibrationen, insb. Biegeschwingungen, des vierten Meßrohrs sowohl vom ersten und zweiten Kopplerelement erster Art als auch vom zweiten, vierten und fünften Kopplerelement zweiter Art jeweils beabstandet lediglich am zweiten Meßrohr 18₂ und am vierten Meßrohr 18₄ fixiert ist. Das fünfte und sechste Kopplerelement 25₅, 25₆ zweiter Art sind in vorzugsweise wiederum einander gegenüberliegend im Meßaufnehmer 11 plaziert.

Desweiteren kann es von Vorteil sein, vorgenannte Kopplerelemente zweiter Art ferner auch zum Haltern einzelner Komponenten der Sensoranordnung verwenden. Demnach ist nach einer weiteren Ausgestaltung der Erfindung vorgesehen, daß der einlaßseitige erste Schwingungssensor 19₁ anteilig jeweils am dritten und vierten Kopplerelement 25₃, 25₄ zweiter Art gehaltert ist. Ferner ist der zweite Schwingungssensor 19₂ in entsprechender Weise am fünften und sechsten Kopplerelement 25₅, 25₆ zweiter Art gehaltert. Somit kann auf sehr effektive, gleichwohl sehr einfache Weise sichergestellt werden, daß das mittels des ersten Schwingungssensors 19₁ im Betrieb generierte Schwingungsmeßsignal zumindest überwiegend synchrone, insb. auch einander phasengleiche, einlaßseitige Biegeschwingungen des ersten und dritten Meßrohrs 18₁, 18₃ relativ zu den gleichermaßen synchronisierten, insb. auch einander phasengleichen, einlaßseitigen Biegeschwingungen des zweiten und vierten Meßrohrs 18₂, 18₄ repräsentiert, bzw. daß das mittels des zweiten Schwingungssensors 19₂ im Betrieb generierte Schwingungsmeßsignal zumindest überwiegend synchrone, insb. auch einander phasengleiche, auslaßseitige Biegeschwingungen des ersten und dritten Meßrohrs 18₁, 18₃ relativ zu den gleichermaßen synchronisierten, insb. auch einander phasengleichen, auslaßseitigen Biegeschwingungen des zweiten und vierten Meßrohrs 18₂, 18₄ repräsentiert. Beispielsweise können im Falle elektro-dynamischer Schwingungssensoren die Zylinderspule des ersten Schwingungssensors 19₁ am dritten Kopplerelement zweiter Art und der zugehörige Permanentmagnet am gegenüberliegenden vierten Kopplerelement zweiter Art bzw. die Zylinderspule des zweiten Schwingungssensors 19₂ am fünften und der zugehörige Permanentmagnet am gegenüberliegenden sechsten Kopplerelement zweiter Art fixiert sein. Für den erwähnten Fall, daß die Sensoranordnung 19 mittels vier Schwingungssensoren 19₁, 19₂, 19₃, 19₄ gebildet ist, sind nach einer weiteren Ausgestaltung der Erfindung sowohl der erste Schwingungssensor 19₁ als auch der dritte Schwingungssensor 19₃ jeweils anteilig am dritten und vierten Kopplerelement zweiter Art gehaltert, insb. derart, daß, wie aus der Zusammenschau der Fig. 4a, 4b, 5a und 5b ohne weiteres ersichtlich, ein minimaler Abstand zwischen dem ersten und dritten Schwingungssensor 19₁, 19₃ mehr als doppelt, insb. mehr 2.5 mal, so groß ist, wie ein Rohr-Außendurchmessers des ersten Meßrohrs 18₁. In entsprechender Weise können zudem auch der zweite Schwingungssensor 19₂ und der vierte Schwingungssensor 19₄ jeweils am fünften und sechsten Kopplerelement zweiter Art gehaltert sein. Alternativ zur Verwendung von an Kopplerelementen 25₁, 25₂ zweiter Art gehalterten dritten und vierten Schwingungssensoren oder in Ergänzung dazu können, wie beispielsweise auch in der eingangs erwähnten US-A 2007/0151368 gezeigt, zum Vermeiden von unerwünschten Torsionsmomenten, insb. um die Längsachse L, aber auch entsprechende Ausgleichsmassen an den jeweiligen Kopplerelementen angebracht sein.

Zur weiteren Verbesserung der Schwingungsgüte der Rohranordnung bei möglichst kurzer Einbaulänge L₁₁ des Meßaufnehmers 11 bzw. möglichst kurzer freier Schwinglänge L₁₈ₓ der Meßrohre 18₁, 18₂, 18₃ bzw. 18₄ können ferner ringförmige Versteifungselementen an den Meßrohren verwendet werden, von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen kann es hierbei von Vorteil sein, wenn auf jedem der Meßrohre 18₁, 18₂, 18₃ bzw. 18₄, wenigstens vier solcher, insb. baugleicher, Versteifungselemente angebracht sind. Die Versteifungselementen können dabei beispielsweise so im Meßaufnehmer 11 plaziert sein, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt.

Durch die Verwendung von vier statt wie bisher zwei parallel durchströmten Meßrohren ist es somit auch möglich, Meßaufnehmer der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von etwa 1bar oder weniger, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann.

## Patentansprüche

1. Meßaufnehmer vom Vibrationstyp zum Erfassen wenigstens einer physikalischen Meßgröße eines in einer Rohrleitung geführten strömungsfähigen Mediums, insb. eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften, wobei eine nominellen Nennweite, D₁₁, des Meßaufnehmers größer als 100 mm ist, welcher Meßaufnehmer umfaßt:
- ein Aufnehmer-Gehäuse (7₁), von dem ein einlaßseitiges erstes Gehäuseende mittels eines genau vier jeweils voneinander beabstandeten Strömungsöffnungen (20_{1A}, 20_{1B}, 20_{1C}, 20_{1D}) aufweisenden einlaßseitigen ersten Strömungsteiler (20₁) und ein auslaßseitiges zweites Gehäuseende mittels eines genau vier jeweils voneinander beabstandeten Strömungsöffnungen (20_{2A}, 20_{2B}, 20_{2C}, 20_{2D}) aufweisenden auslaßseitigen zweiten Strömungsteilers (20₂) gebildet sind;
- eine Rohranordnung mit genau vier unter Bildung strömungstechnisch parallel geschalteter Strömungspfade an die, insb. baugleichen, Strömungsteiler (20₁, 20₂) angeschlossenen gebogenen, insb. zumindest abschnittsweise V-förmige und/oder zumindest abschnittsweise kreisbogenförmigen, Meßrohre (18₁, 18₂, 18₃, 18₄) zum Führen von strömendem Medium, von denen
-- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein zum ersten Meßrohr zumindest abschnittsweise paralleles zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
-- ein zum dritten Meßrohr zumindest abschnittsweise paralleles viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet,
- eine elektro-mechanische, insb. mittels elektro-dynamischer Schwingungserreger (5₁, 5₂) gebildete, Erregeranordnung (5) zum Erzeugen und/oder Aufrechterhalten von mechanischen Schwingungen, insb. von Biegeschwingungen, der vier Meßrohre (18₁, 18₂, 18₃, 18₄); sowie
- eine auf Vibrationen, insb. mittels der Erregeranordnung angeregten Biegeschwingungen, der Meßrohre (18₁, 18₂, 18₃, 18₄) reagierende, insb. elektro-dynamische und/oder mittels einander baugleicher Schwingungssensoren (19₁, 19₂,19₃,19₄) gebildete, Sensoranordnung (19) zum Erzeugen von Vibrationen, insb. Biegeschwingungen, der Meßrohre (18₁, 18₂, 18₃, 18₄) repräsentierenden Schwingungsmeßsignalen;
- wobei jeder der ersten und zweiten Strömungsteiler jeweils als integraler Bestandteil des Gehäuses ausgebildet ist;
- wobei die Meßrohre so ausgebildet und im Meßaufnehmer angeordnet sind,
-- daß die Rohranordnung eine sowohl zwischen dem ersten Meßrohr und dem dritten Meßrohr als auch zwischen dem zweiten Meßrohr und dem vierten Meßrohr liegende erste gedachte Längsschnittebene (XZ) aufweist, bezüglich der die Rohranordnung spiegelsymmetrisch ist, und
-- daß die Rohranordnung eine zu deren gedachter erster Längsschnittebene (XZ) senkrechte, sowohl zwischen dem ersten Meßrohr und zweiten Meßrohr als auch zwischen dem dritten Meßrohr und vierten Meßrohr verlaufende zweite gedachte Längsschnittebene (YZ) aufweist, bezüglich der die Rohranordnung gleichfalls spiegelsymmetrisch ist;
- wobei die Erregeranordnung (5) mittels eines, insb. elektrodynamischen und/oder Schwingungen des ersten Meßrohrs (18₁) relativ zum zweiten Meßrohr (18₂) differentiell anregenden, ersten Schwingungserregers (5₁) sowie mittels eines, insb. elektrodynamischen und/oder Schwingungen des dritten Meßrohrs (18₃) relativ zum vierten Meßrohr (18₄) differentiell anregenden, zweiten Schwingungserregers (5₂) gebildet ist; und
- wobei die Sensoranordnung (19) mittels eines, insb. elektrodynamischen und/oder Schwingungen des ersten Meßrohrs (18₁) relativ zum zweiten Meßrohr (18₂) differentiell erfassenden, einlaßseitigen ersten Schwingungssensors (19₁), eines, insb. elektrodynamischen und/oder Schwingungen des ersten Meßrohrs (18₁) relativ zum zweiten Meßrohr (18₂) differentiell erfassenden, auslaßseitigen zweiten Schwingungssensors (19₂), eines, insb. elektrodynamischen und/oder Schwingungen des dritten Meßrohrs (18₃) relativ zum vierten Meßrohr (18₄) differentiell erfassenden, einlaßseitigen dritten Schwingungssensors (19₃) sowie eines, insb. elektrodynamischen und/oder Schwingungen des dritten Meßrohrs (18₃) relativ zum vierten Meßrohr (18₄) differentiell erfassenden, auslaßseitigen vierten Schwingungssensors (19₄) gebildet ist.

2. Meßaufnehmer nach dem vorherigen Anspruch, wobei die beiden Strömungsteiler (20₁, 20₂) so ausgebildet und im Meßaufnehmer angeordnet sind,
- daß eine die erste Strömungsöffnung (20_{1A}) des ersten Strömungsteilers (20₁) mit der ersten Strömungsöffnung (20_{2A}) des zweiten Strömungsteilers (20₂) imaginär verbindende gedachte erste Verbindungsachse (Z₁) des Meßaufnehmers parallel zu einer die zweite Strömungsöffnung (20_{1B}) des ersten Strömungsteilers (20₁) mit der zweiten Strömungsöffnung (20_{2B}) des zweiten Strömungsteilers (20₂) imaginär verbindende gedachten zweiten Verbindungsachse (Z₂) des Meßaufnehmers verläuft,
- daß eine die dritte Strömungsöffnung (20_{1C}) des ersten Strömungsteilers (20₁) mit der dritten Strömungsöffnung (20_{2C}) des zweiten Strömungsteilers (20₂) imaginär verbindende gedachte dritten Verbindungsachse (Z₃) des Meßaufnehmers parallel zu einer die vierte Strömungsöffnung (20_{1D}) des ersten Strömungsteilers (20₁) mit der vierten Strömungsöffnung (20_{2B}) des zweiten Strömungsteilers (20₂) imaginär verbindende gedachten vierten Verbindungsachse (Z₄) des Meßaufnehmers verläuft, und
- daß eine erste gedachte Längsschnittebene (XZ₁) des Meßaufnehmers, innerhalb der die, insb. zu einer mit der Rohrleitung fluchtenden Hauptströmungsachse des Meßaufnehmers parallele, erste gedachte Verbindungsachse (Z₁) und die zweite gedachte Verbindungsachse (Z₁) verlaufen, parallel zu einer zweiten gedachten Längsschnittebene (XZ₂) des Meßaufnehmers, innerhalb der die gedachte dritte Verbindungsachse (Z₃) und die gedachte vierte Verbindungsachse (Z₄) verlaufen, ist; insb. derart, daß die erste gedachte Längsschnittebene (XZ) der Rohranordnung zwischen der ersten und zweiten gedachten Längsschnittebene (XZ₁, XZ₂) des Meßaufnehmers liegt und/oder parallel zur ersten und zweiten gedachten Längsschnittebene (XZ₁, XZ₂) des Meßaufnehmers ist.

3. Meßaufnehmer nach dem vorherigen Anspruch, wobei die beiden Strömungsteiler (20₁, 20₂) so ausgebildet und im Meßaufnehmer angeordnet sind,
- daß eine dritte gedachte Längsschnittebene (YZ₁) des Meßaufnehmers, innerhalb der die gedachte erste Verbindungsachse (Z₁) und die die gedachte dritte Verbindungsachse (Z₃) verlaufen, parallel zu einer vierten gedachten Längsschnittebene (XY₂) des Meßaufnehmers, innerhalb der die gedachte zweite Verbindungsachse (Z₂) und die die gedachte vierte Verbindungsachse (Z₄) verlaufen, ist, und
- daß die zweite gedachte Längsschnittebene (YZ) der Rohranordnung zwischen der dritten gedachten Längsschnittebene (YZ₁) des Meßaufnehmers und der vierten gedachten Längsschnittebene (YZ₂) des Meßaufnehmers verläuft, insb. derart, daß die zweite gedachte Längsschnittebene (YZ) der Rohranordnung parallel zur dritten gedachten Längsschnittebene (YZ₁) des Meßaufnehmers und parallel zur vierten gedachten Längsschnittebene (YZ₂) des Meßaufnehmers ist.

4. Meßaufnehmer nach einem der vorherigen Ansprüche,
- wobei die vier Strömungsöffnungen (20_{1A}, 20_{1B}, 20_{1C}, 20_{1D}) des ersten Strömungsteilers (20₂) so angeordnet sind, daß zu, insb. kreisförmigen, Querschnittsflächen der Strömungsöffnungen (20_{1A}; 20_{1B}; 20_{1C}; 20_{1D}) des ersten Strömungsteilers (20₁) zugehörige gedachte Flächenschwerpunkte die Eckpunkte eines gedachten Quadrats bilden, wobei nämliche Querschnittsflächen in einer, insb. zur ersten gedachten Längsschnittebene des Meßaufnehmers bzw. zur zweiten gedachten Längsschnittebene des Meßaufnehmers senkrechten, gemeinsamen gedachten Querschnittsschnittebene des ersten Strömungsteilers (20₁) liegen;
- wobei die vier Strömungsöffnungen (20_{2A}, 20_{2B}, 20_{2C}, 20_{2D}) des zweiten Strömungsteilers (20₂) so angeordnet sind, daß zu, insb. kreisförmigen, Querschnittsflächen der Strömungsöffnungen (20_{2A}; 20_{2B}; 20_{2C}; 20_{2D}) des zweiten Strömungsteilers (20₂) zugehörige gedachte Flächenschwerpunkte die Eckpunkte eines gedachten Quadrats bilden, wobei nämliche Querschnittsflächen in einer, insb. zur ersten gedachten Längsschnittebene des Meßaufnehmers bzw. zur zweiten gedachten Längsschnittebene des Meßaufnehmers senkrechten, gemeinsamen gedachten Querschnittsschnittebene des zweiten Strömungsteilers (20₂) liegen;
- wobei jedes der vier, insb. gleichkalibrigen, Meßrohre (18₁, 18₂, 18₃, 18₄) so angeordnet ist,
-- daß ein kleinster seitlicher Abstand jedes der vier, insb. gleichlangen, Meßrohre von einer Gehäuseseitenwand des Aufnehmer-Gehäuses jeweils größer als Null, insb. größer als 3 mm und/oder größer als ein Doppeltes einer jeweiligen Rohrwandstärke, beträgt und/oder
-- daß ein kleinster seitlicher Abstand zwischen zwei benachbarten Meßrohren jeweils größer als 3 mm und/oder größer als die Summe von deren jeweiligen Rohrwandstärken beträgt; und
- wobei jede der Strömungsöffnungen so angeordnet ist,
-- daß ein kleinster seitlicher Abstand jeder der Strömungsöffnungen von einer Gehäuseseitenwand des Aufnehmer-Gehäuses jeweils größer als Null, insb. größer als 3 mm und/oder größer als ein Doppeltes einer kleinsten Rohrwandstärke der Meßrohre, beträgt und/oder
-- daß ein kleinster seitlicher Abstand zwischen den Strömungsöffnungen größer als 3 mm und/oder größer als ein Doppeltes einer kleinsten Rohrwandstärke der Meßrohre beträgt.

5. Meßaufnehmer nach einem der vorherigen Ansprüche, weiters umfassend
- ein, insb. plattenförmigen, erstes Kopplerelement (24₁) erster Art, das zum Bilden von einlaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, sowie
- ein, insb. plattenförmigen und/oder zum ersten Kopplerelement (24₁) baugleiches, zweites Kopplerelement (24₂) erster Art, das zum Bilden von auslaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler wie auch vom ersten Kopplerelement beabstandet auslaßseitig zumindest am ersten Meßrohr und am zweiten Meßrohr fixiert ist;
- wobei das erste Meßrohr und das zweite Meßrohr zumindest über einen sich zwischen dem ersten Kopplerelement erster Art und dem zweiten Kopplerelement erster Art erstreckenden Bereich zueinander parallel sind, und wobei das dritte Meßrohr und das vierte Meßrohr zumindest über einen sich zwischen dem ersten Kopplerelement erster Art und dem zweiten Kopplerelement erster Art erstreckenden Bereich zueinander parallel sind.

6. Meßaufnehmer nach Anspruch 5,
- wobei alle vier Meßrohre (18₁, 18₂, 18₃, 18₄) mittels des ersten Kopplerelements (24₁) erster Art sowie mittels des zweiten Kopplerelements (24₂) erster Art miteinander mechanisch verbunden sind,
- wobei das erste Kopplerelement (24₁) erster Art plattenförmig ausgebildet ist, insb. in derart, daß es eine rechteckförmige, quadratische, runde, kreuzförmig oder H-förmige Grundfläche aufweist und
- wobei das zweite Kopplerelement (24₂) erster Art, insb. gleichermaßen wie das erste Kopplerelement (24₁) erster Art, plattenförmig ausgebildet ist, insb. in derart, daß es eine rechteckförmige, quadratische, runde, kreuzförmig oder H-förmige aufweist.

7. Meßaufnehmer nach einem der Ansprüche 5 bis 6,
- wobei jedes der vier, insb. gleichkalibrigen und/oder gleichlangen, Meßrohre (18₁, 18₂, 18₃, 18₄) ein Kaliber, D₁₈, aufweist, das mehr als 40 mm, insb. mehr als 60 mm, beträgt,
- wobei eine einer Länge eines zwischen dem ersten Kopplerelement erster Art und dem zweiten Kopplerelement erster Art verlaufenden Abschnitts der Biegelinie entsprechende freie Schwinglänge, L₁₈ₓ, des ersten Meßrohrs, insb. jedes der Meßrohre, weniger als 3000 mm, insb. weniger als 2500 mm und/oder mehr als 800 mm, beträgt und ein Kaliber-zu-Schwinglänge-Verhältnis, D₁₈/L₁₈ₓ, des Meßaufnehmers, definiert durch ein Verhältnis des Kalibers, D₁₈, des ersten Meßrohrs (18₁) zur freien Schwinglänge, L₁₈ₓ, des ersten Meßrohrs (18₁), mehr als 0.03, insb. mehr als 0.05 und/oder weniger als 0.15, beträgt, und
- wobei die Meßrohre so gebogen und so angeordnet sind, daß ein Kaliber-zu-Höhe-Verhältnis der Rohranordnung, definiert durch ein Verhältnis des Kalibers, D₁₈, des ersten Meßrohrs (18₁) zu einer maximalen seitlichen Ausdehnung der Rohranordnung, gemessen von einem Scheitelpunkt des ersten Meßrohrs zu einem Scheitelpunkt des dritten Meßrohrs, mehr als 0.1, insb. mehr als 0.2 und/oder weniger als 0.35, beträgt.

8. Meßaufnehmer nach einem der vorherigen Ansprüche, weiters umfassend
- ein, insb. plattenförmiges oder stabförmiges, erstes Kopplerelement (25₁) zweiter Art, das zum Synchronisieren von Vibrationen, insb. Biegeschwingungen, des ersten Meßrohrs (18₁) und von dazu frequenzgleichen Vibrationen, insb. Biegeschwingungen, des dritten Meßrohrs (18₃) sowohl vom ersten Kopplerelement (24₁) erster Art als auch vom zweiten Kopplerelement (24₂) erster Art beabstandet lediglich am ersten Meßrohr (18₁) und am dritten Meßrohr (18₃) fixiert ist, sowie
- ein, insb. plattenförmiges oder stabförmiges, zweites Kopplerelement (25₂) zweiter Art, das zum Synchronisieren von Vibrationen, insb. Biegeschwingungen, des zweiten Meßrohrs (18₂) und von dazu frequenzgleichen Vibrationen, insb. Biegeschwingungen, des vierten Meßrohrs (18₄) sowohl vom ersten Kopplerelement (24₁) erster Art als auch vom zweiten Kopplerelement (24₂) erster Art wie auch vom ersten Kopplerelement (25₁) zweiter Art beabstandet lediglich am zweiten Meßrohr (18₂) und am vierten Meßrohr (18₄) fixiert ist.

9. Meßaufnehmer nach einem der Anspruch 8, weiters umfassend:
- ein, insb. plattenförmiges oder stabförmiges, drittes Kopplerelement (25₃) zweiter Art, das zum Synchronisieren von Vibrationen, insb. Biegeschwingungen, des ersten Meßrohrs (18₁) und von dazu frequenzgleichen Vibrationen, insb. Biegeschwingungen, des dritten Meßrohrs (18₃) sowohl vom ersten Kopplerelement erster Art (24₁) als auch vom zweiten Kopplerelement (24₂) erster Art wie auch vom ersten Kopplerelement (25₁) zweiter Art beabstandet lediglich am ersten Meßrohr (18₁) und am dritten Meßrohr (18₃) fixiert ist, sowie
- ein, insb. plattenförmiges oder stabförmiges, viertes Kopplerelement (25₄) zweiter Art, das zum Synchronisieren von Vibrationen, insb. Biegeschwingungen, des zweiten Meßrohrs (18₂) und von dazu frequenzgleichen Vibrationen, insb. Biegeschwingungen, des vierten Meßrohrs (18₄) sowohl vom ersten und zweiten Kopplerelement (24₁, 24₂) erster Art als auch vom zweiten und dritten Kopplerelement (25₂, 25₃) zweiter Art jeweils beabstandet lediglich am zweiten Meßrohr (18₂) und am vierten Meßrohr (18₄) fixiert ist.

10. Meßaufnehmer nach einem der Ansprüche 7 bis 9,
- wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen;
- wobei jeder der, insb. jeweils eine Masse von mehr als 50 kg aufweisenden, Flansche (6₁, 6₂) jeweils eine Dichtfläche (6_{1A}, 6_{2A}) zum fluiddichten Verbinden des Meßaufnehmers mit dem jeweils korrespondierenden Rohrsegment der Rohrleitung aufweist, und wobei ein Abstand zwischen den Dichtflächen (6_{1A}, 6_{2A}) beider Flansche (6₁, 6₂) eine, insb. mehr als 1200 mm betragende und/oder weniger als 3000 mm betragende, Einbaulänge, L₁₁, des Meßaufnehmers definiert; und
- wobei eine einer Länge eines zwischen der ersten Strömungsöffnung (20_{1A}) des ersten Strömungsteilers (20₁) und der ersten Strömungsöffnung (20_{2A}) des zweiten Strömungsteilers (20₂) verlaufenden Abschnitts einer Biegelinie des ersten Meßrohrs entsprechende Meßrohrlänge, L₁₈, des ersten Meßrohrs (18₁) mehr als 1000 mm, insb. mehr als 1200 mm und/oder weniger als 2000 mm, beträgt und ein Meßrohrlänge-zu-Einbaulänge-Verhältnis, L₁₈/L₁₁, des Meßaufnehmers, definiert durch ein Verhältnis der Meßrohrlänge, L₁₈, des ersten Meßrohrs zur Einbaulänge, L₁₁, des Meßaufnehmers, mehr als 0.7, insb. mehr als 0.8 und/oder weniger als 0.95, beträgt, insb. derart, daß ein Kaliber-zu-Einbaulänge-Verhältnis, D₁₈/L₁₁, des Meßaufnehmers, definiert durch ein Verhältnis des Kalibers, D₁₈, des ersten Meßrohrs zur Einbaulänge, L₁₁, des Meßaufnehmers, mehr als 0.02, insb. mehr als 0.05 und/oder weniger als 0.09, beträgt, und/oder daß ein Schwinglänge-zu-Einbaulänge-Verhältnis, L₁₈ₓ/L₁₁, des Meßaufnehmers, definiert durch ein Verhältnis der freien Schwinglänge, L₁₈ₓ, des ersten Meßrohrs zur Einbaulänge, L₁₁, des Meßaufnehmers, mehr als 0.55, insb. mehr als 0.6 und/oder weniger als 0.9, beträgt.

11. Meßaufnehmer nach dem der vorherigen Anspruch,
- wobei ein Nennweite-zu Einbaulänge-Verhältnis, D₁₁/L₁₁, des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist.

12. Meßaufnehmer nach einem der vorherigen Ansprüche,
- wobei ein Mittelsegment (7_{1A}) des Aufnehmer-Gehäuses (7₁) mittels eines geraden, insb. kreiszylindrischen, Rohres gebildet ist; und/oder
- wobei ein Massenverhältnis, M₁₁/M₁₈, einer Leermasse, M₁₁, des gesamten Meßaufnehmers zu einer Leermasse, M₁₈, des ersten Meßrohrs größer als 10, insb. größer als 15 und kleiner als 25, ist; und/oder
- wobei jeder der beiden Strömungsteiler (20₁, 20₂) jeweils eine Masse von mehr als 20 kg, insb. von mehr als 40 kg, aufweist; und/oder
- wobei eine Leermasse, M₁₈, des ersten Meßrohrs, insb. jedes der Meßrohre (18₁, 18₂, 18₃, 18₄), größer als 20 kg, insb. größer als 30 kg und/oder kleiner als 50 kg, ist; und/oder
- wobei eine Leermasse, M₁₁, des Meßaufnehmers größer als 200 kg, insb. größer als 300 kg, ist; und/oder
- wobei die vier Meßrohre (18₁, 18₂, 18₃, 18₄) hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind; und/oder
- wobei die Meßrohre zueinander paarweise parallel sind; und/oder
- wobei die Erregeranordnung derart ausgebildet ist, daß damit das erste Meßrohr (181) und das zweite Meßrohr (182) im Betrieb zu gegenphasigen Biegeschwingungen und das dritte Meßrohr (183) und das vierte Meßrohr (184) im Betrieb zu gegenphasigen Biegeschwingungen anregbar sind.

13. Meßaufnehmer nach einem der vorherigen Ansprüche, wobei der erste und dritte Schwingungssensor (19₁, 19₃) elektrisch seriell verschaltet sind, derart, daß ein gemeinsames Schwingungsmeßsignal gemeinsame einlaßseitige Schwingungen des ersten und dritten Meßrohrs (18₁, 18₃) relativ zum zweiten und vierten Meßrohr (18₂, 18₄) repräsentiert, und daß der zweite und vierte Schwingungssensor (19₂, 19₄) elektrisch seriell verschaltet sind, derart, daß ein gemeinsames Schwingungsmeßsignal gemeinsame auslaßseitige Schwingungen des ersten und dritten Meßrohrs (18₁, 18₃) relativ zum zweiten und vierten Meßrohr (18₂, 18₄) repräsentiert.

14. Meßaufnehmer nach Anspruch 7, in Verbindung mit Anspruch 10 und 13,
- wobei eine einer Länge eines zwischen dem ersten Schwingungssensor (19₁) und dem zweite Schwingungssensor (19₂) verlaufenden Abschnitts einer Biegelinie des ersten Meßrohrs entsprechende Meßlänge, L₁₉, des Meßaufnehmers mehr als 500 mm, insb. mehr als 600 mm und/oder weniger als 1200 mm, beträgt, und
- wobei ein Meßlänge-zu-Einbaulänge-Verhältnis, L₁₉/L₁₁, des Meßaufnehmers, definiert durch ein Verhältnis der Meßlänge, L₁₉, zur Einbaulänge, L₁₁, des Meßaufnehmers, mehr als 0.3, insb. mehr als 0.4 und/oder weniger als 0.7, beträgt, insb. derart, daß ein Kaliber-zu-Meßlänge-Verhältnis, D₁₈/L₁₉, des Meßaufnehmers, definiert durch ein Verhältnis des Kalibers, D₁₈, des ersten Meßrohrs zur Meßlänge, L₁₉, des Meßaufnehmers, mehr als 0.05, insb. mehr als 0.09, beträgt, und/oder daß ein Meßlänge-zu-Schwinglänge-Verhältnis, L₁₉/L₁₈ₓ, des Meßaufnehmers, definiert durch ein Verhältnis der Meßlänge, L₁₉, des Meßaufnehmers zur freien Schwinglänge, L₁₈ₓ, des ersten Meßrohrs, mehr als 0.3, insb. mehr als 0.4 und/oder weniger als 0.95, beträgt.

15. Meßaufnehmer nach einem der vorherigen Ansprüche,
- wobei der erste und zweite Schwingungserreger (5₁, 5₂) elektrisch seriell verschaltet sind, derart, daß ein gemeinsames Treibersignal gemeinsame Schwingungen des ersten und dritten Meßrohrs (18₁, 18₃) relativ zum zweiten und vierten Meßrohr (18₂, 18₄) anregt.

16. In-Line-Meßgerät zum Messen einer Dichte und/oder einer Massendurchflußrate, insb. auch eines über ein Zeitintervall totalisierten Gesamt-Massendurchflusses, eines in einer Rohrleitung zumindest zeitweise, insb. mit einer Massendurchflußrate von mehr als 1000 t/h, strömenden Mediums, insb. eines Gases, einer Flüssigkeit, eines Pulvers oder eines anderen strömungsfähigen Stoffes, welches, insb. als Kompaktgerät ausgebildete, In-Line-Meßgerät einen Meßaufnehmer gemäß einem der vorherigen Ansprüche sowie eine mit dem Meßaufnehmer elektrisch gekoppelte, insb. auch mechanisch starr verbundene, Meßgerät-Elektronik umfaßt.

17. Verwenden eines Meßaufnehmers gemäß einem der Ansprüche 1 bis 15 zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums, insb. eines Gases, einer Flüssigkeit, eines Pulvers oder eines anderen strömungsfähigen Stoffes.

## Claims

1. Vibronic-type sensor designed to measure at least one physical variable of a medium which is able to flow in a pipe, particularly a gas, a liquid, a powder or another substance which is able to flow, and/or designed to generate Coriolis forces serving to measure a mass flow rate of a medium which is able to flow, particularly a gas, a liquid, a powder or another substance which is able to flow, conducted in a pipe, wherein a nominal diameter, D₁₁, of the sensor is greater than 100 mm, wherein said sensor comprises:
- a sensor housing (7₁) whose first housing end on the inlet side is formed by means of a first flow divider (20₁) on the inlet side, said flow divider having exactly four flow openings (20_{1A}, 20_{1B}, 20_{1C}, 20_{1D}) spaced apart from one another, and whose second housing end on the outlet side is formed by means of a second flow divider (20₂) on the outlet side, said flow divider having exactly four flow openings (20_{2A}, 20_{2B}, 20_{2C}, 20_{2D}) spaced apart from one another;
- a tube arrangement with exactly four curved measuring tubes (18₁, 18₂, 18₃, 18₄), particularly at least partially V-shaped and/or at least partially arc-shaped, wherein said tubes are connected to the flow dividers (20₁, 20₂), which are particularly identical in design, to form flow paths which are switched in parallel in terms of flow, and wherein said tubes are designed to conduct a flowing medium, wherein of said tubes
- a first measuring tube (18₁) enters into a first flow opening (20_{1A}) of the first flow divider (20₁) with a first measuring tube end on the inlet side and enters into a first flow opening (20_{2A}) of the second flow divider (20₂) with a second measuring tube end on the outlet side,
- a second measuring tube (18₂), which is at least partially parallel to the first measuring tube, enters into a second flow opening (20_{1B}) of the first flow divider (20₁) with a first measuring tube end on the inlet side and enters into a second flow opening (20_{2B}) of the second flow divider (20₂) with a second measuring tube end on the outlet side,
- a third measuring tube (18₃) enters into a third flow opening (20_{1C}) of the first flow divider (20₁) with a first measuring tube end on the inlet side and enters into a third flow opening (20_{2C}) of the second flow divider (20₂) with a second measuring tube end on the outlet side and
- a fourth measuring tube (18₄), which is at least partially parallel to the third measuring tube, enters into a fourth flow opening (20_{1D}) of the first flow divider (20₁) with a first measuring tube end on the inlet side and enters into a fourth flow opening (20_{2D}) of the second flow divider (20₂) with a second measuring tube end on the outlet side,
- an electromechanical exciter arrangement (5), particularly formed by electrodynamic vibration exciters (5₁, 5₂), which is designed to generate and/or maintain mechanical vibrations, particularly flexural vibrations, of the four measuring tubes (18₁, 18₂, 18₃, 18₄); as well as
- a sensor arrangement (19) reacting to vibrations, particularly flexural vibrations excited by the exciter arrangement, of the measuring tubes (18₁, 18₂, 18₃, 18₄), particularly electrodynamic sensors (19₁, 19₂, 19₃, 19₄) and/or sensors formed by vibration sensors (19₁, 19₂, 19₃, 19₄) which are identical in design, said sensors being designed to generate vibration measuring signals representing vibrations, particularly flexural vibrations, of the measuring tubes (18₁, 18₂, 18₃, 18₄);
- wherein each of the first and second flow dividers is respectively designed as an integral part of the housing;
- wherein the measuring tubes are designed and arranged in the sensor in such a way that
-- the tube arrangement has a first imaginary longitudinal cross-section (XZ) which is situated both between the first measuring tube and the third measuring tube and between the second measuring tube and the fourth measuring tube and in relation to which the tube arrangement is symmetrically identical, and
-- the tube arrangement has a second imaginary longitudinal cross-section (YZ), perpendicular to the first imaginary longitudinal cross-section (XZ), said second plane extending both between the first measuring tube and the second measuring tube and between the third measuring tube and the fourth measuring tube and in relation to which the tube arrangement is also symmetrically identical;
- wherein the exciter arrangement (5) is formed by a first vibration exciter (5₁), which is particularly electrodynamic, and/or which excites vibrations of the first measuring tube (18₁) in a differential manner in relation to the second measuring tube (18₂), and by a second vibration exciter (5₂), particularly electrodynamic, and/or which excites vibrations of the third measuring tube (18₃) in a differential manner in relation to the fourth measuring tube (18₄); and
- wherein the sensor arrangement (19) is formed by a first vibration sensor (19₁) arranged on the inlet side, particularly electrodynamic, and/or measuring vibrations of the first measuring tube (18₁) in relation to the second measuring tube (18₂) in a differential manner, by a second vibration sensor (19₂) arranged on the outlet side, particularly electrodynamic, and/or measuring vibrations of the first measuring tube (18₁) in relation to the second measuring tube (18₂), by a third vibration sensor (19₃) arranged on the inlet side, particularly electrodynamic, and/or measuring vibrations of the third measuring tube (18₃) in relation to the fourth measuring tube (18₄), and by a fourth vibration sensor (19₄) arranged on the outlet side, particularly electrodynamic, and/or measuring vibrations of the third measuring tube (18₃) in relation to the fourth measuring tube (18₄).

2. Sensor as claimed in the previous claim, wherein the two flow dividers (20₁, 20₂) are designed and arranged in the sensor in such a way that
- a first imaginary connection axis (Z₁) of the sensor, connecting, in an imaginary manner, the first flow opening (20_{1A}) of the first flow divider (20₁) to the first flow opening (20_{2A}) of the second flow divider (20₂), is parallel to a second imaginary connection axis (Z₂) of the sensor, connecting, in an imaginary manner, the second flow opening (20_{1B}) of the first flow divider (20₁) to the second flow opening (20_{2B}) of the second flow divider (20₂),
- a third imaginary connection axis (Z₃) of the sensor, connecting, in an imaginary manner, the third flow opening (20_{1C}) of the first flow divider (20₁) to the third flow opening (20_{2C}) of the second flow divider (20₂), is parallel to a fourth imaginary connection axis (Z₄) of the sensor, connecting, in an imaginary manner, the fourth flow opening (20_{1D}) of the first flow divider (20₁) to the fourth flow opening (20_{2B}) of the second flow divider (20₂), and
- a first imaginary longitudinal cross-section (XZ₁) of the sensor, in which the first imaginary connection axis (Z₁), particularly parallel to a main flow axis of the sensor that is flush with the pipe, and the second imaginary connection axis (Z₂) extend, is parallel to a second imaginary longitudinal cross-section (XZ₂) of the sensor, in which the third imaginary connection axis (Z₃) and the fourth imaginary connection axis (Z₄) extend; particularly in such a way that the first imaginary longitudinal cross-section (XZ) of the tube arrangement is located between the first and the second imaginary longitudinal cross-section (XZ₁, XZ₂) of the sensor and/or is parallel to the first and to the second imaginary longitudinal cross-section (XZ₁, XZ₂) of the sensor.

3. Sensor as claimed in the previous claim, wherein the two flow dividers (20₁, 20₂) are designed and arranged in the sensor in such a way that
- a third imaginary longitudinal cross-section (YZ₁) of the sensor, in which the first imaginary connection axis (Z₁) and the third imaginary connection axis (Z₃) extend, is parallel to a fourth imaginary longitudinal cross-section (XY₂) of the sensor, in which the second imaginary connection axis (Z₂) and the fourth imaginary connection axis (Z₄) extend, and
- the second imaginary longitudinal cross-section (YZ) of the tube arrangement extends between the third imaginary longitudinal cross-section (YZ₁) of the sensor and the fourth imaginary longitudinal cross-section (YZ₂) of the sensor, particularly in such a way that the second imaginary longitudinal cross-section (YZ) of the tube arrangement is parallel to the third imaginary longitudinal cross-section (YZ₁) of the sensor and parallel to the fourth imaginary longitudinal cross-section (YZ₂) of the sensor.

4. Sensor as claimed in one of the previous claims,
- wherein the four flow openings (20_{1A}, 20_{1B}, 20_{1C}, 20_{1D}) of the first flow divider (20₁) are arranged in such a way that imaginary centroid points associated with cross-sectional areas, particularly circular, of the flow openings (20_{1A}, 20_{1B}, 20_{1C}, 20_{1D}) of the first flow divider (20₁) form the corner points of an imaginary square, wherein said cross-sectional areas are arranged on a common imaginary cross-sectional plane of the first flow divider (20₁), particularly perpendicular to the first imaginary longitudinal cross-section of the sensor or to the second imaginary longitudinal cross-section of the sensor;
- wherein the four flow openings (20_{2A}, 20_{2B}, 20_{2C}, 20_{2D}) of the second flow divider (20₂) are arranged in such a way that imaginary centroid points associated with cross-sectional areas, particularly circular, of the flow openings (20_{2A}, 20_{2B}, 20_{2C}, 20_{2D}) of the second flow divider (20₂) form the corner points of an imaginary square, wherein said cross-sectional areas are arranged on a common imaginary cross-sectional plane of the second flow divider (20₂), particularly perpendicular to the first imaginary longitudinal cross-section of the sensor or to the second imaginary longitudinal cross-section of the sensor;
- wherein each of the four measuring tubes (18₁, 18₂, 18₃, 18₄), particularly of the same caliber, is arranged in such a way that
-- a smallest lateral distance of each of the four measuring tubes, particularly of the same length, in relation to a lateral wall of the sensor housing is greater than zero in each case, particularly greater than 3 mm and/or greater than twice a thickness of the respective tube wall, and/or
-- a smallest lateral distance between two adjacent measuring tubes is greater than 3 mm and/or greater than the sum of the thicknesses of the respective tube walls; and
- wherein each of the flow openings is arranged in such a way that
-- a smallest lateral distance of each of the flow openings in relation to a lateral wall of the sensor housing is greater than zero in each case, particularly greater than 3 mm and/or greater than double a smallest thickness of the wall of the measuring tubes, and/or
-- a smallest lateral distance between the flow openings is greater than 3 mm and/or greater than double a smallest thickness of the wall of the measuring tubes.

5. Sensor as claimed in one of the previous claims, further comprising
- a first coupling element (24₁) of the first type, particularly plate-like, is fixed, on the inlet side, at least on the first measuring tube and on the second measuring tube, at a distance to both the first flow divider and the second flow divider, for the purpose of forming inlet-side nodes at least for vibrations, particularly flexural vibrations, of the first measuring tube and for vibrations anti-phase to said vibrations, particularly flexural vibrations, of the second measuring tube, and
- a second coupling element (24₂) of the first type, particularly plate-like and/or identical in design to the first coupling element (24₁), wherein said second element is fixed, on the outlet side, at least on the first measuring tube and on the second measuring tube, at a distance to both the first flow divider and the second flow divider and the first coupling element, for the purpose of forming outlet-side nodes at least for vibrations, particularly flexural vibrations, of the first measuring tube and for vibrations anti-phase to said vibrations, particularly flexural vibrations, of the second measuring tube;
- wherein the first measuring tube and the second measuring tube are parallel to one another at least over an area extending between the first coupling element of the first type and the second coupling element of the first type, and wherein the third measuring tube and the fourth measuring tube are parallel to one another at least over an area extending between the first coupling element of the first type and the second coupling element of the first type.

6. Sensor as claimed in Claim 5,
- wherein all four measuring tubes (18₁, 18₂, 18₃, 18₄) are mechanically interconnected by means of the first coupling element (24₁) of the first type and the second coupling element (24₂) of the first type,
- wherein the first coupling element (24₁) of the first type is designed to be plate-like, particularly in such a way that it has a rectangular, square, round, cross-shaped or H-shaped basic surface, and
- wherein the second coupling element (24₂) of the first type is designed to be plate-like, particularly in the same way as the first coupling element (24₁) of the first type, particularly in such a way that it has a rectangular, square, round, cross-shaped or H-shaped basic surface.

7. Sensor as claimed in one of the Claims 5 to 6,
- wherein each of the four measuring tubes (18₁, 18₂, 18₃, 18₄), particularly of the same caliber and/or of same length, has a caliber, D₁₈, which is greater than 40 mm, particularly greater than 60 mm,
- wherein a free vibration length, L₁₈ₓ, of the first measuring tube, particularly of each of the measuring tubes, said length corresponding to a length of a section of the bending line extending between the first coupling element of the first type and the second coupling element of the second type, is less than 3000 mm, particularly less than 2500 mm, and/or greater than 800 mm, and a caliber/vibration length ratio, D₁₈/L₁₈ₓ, of the sensor, defined by a ratio of the caliber, D₁₈, of the first measuring tube (18₁) to the free vibration length, L₁₈ₓ, of the first measuring tube (18₁), is greater than 0.03, particularly greater than 0.05 and/or less than 0,15, and
- wherein the measuring tubes are curved and arranged in such a way that a caliber/ height ratio of the tube arrangement, defined by a ratio of the caliber, D₁₈, of the first measuring tube (18₁) to a maximum lateral extension of the tube arrangement, measured from a vertex of the first measuring tube to a vertex of the third measuring tube, is greater than 0.1, particularly greater than 0.2 and/or less than 0.35.

8. Sensor as claimed in one of the previous claims, further comprising
- a first coupling element (25₁) of the second type, particularly plate-like or rod-like, serving to synchronize vibrations, particularly flexural vibrations, of the first measuring tube (18₁) and vibrations of the same frequency, particularly flexural vibrations, of the third measuring tube (18₃), wherein said first coupling element is only fixed on the first measuring tube (18₁) and the third measuring tube (18₃) at a distance from both the first coupling element (24₁) of the first type and the second coupling element (24₂) of the first type, and
- a second coupling element (25₂) of the second type, particularly plate-like or rod-like, serving to synchronize vibrations, particularly flexural vibrations, of the second measuring tube (18₂) and vibrations of the same frequency, particularly flexural vibrations, of the fourth measuring tube (18₄), wherein said second coupling element is only fixed on the second measuring tube (18₂) and on the fourth measuring tube (18₄) at a distance from both the first coupling element (24₁) of the first type and the second coupling element (24₂) of the first type, and also at a distance from the first coupling element (25₁) of the second type.

9. Sensor as claimed in Claim 8, further comprising :
- a third coupling element (25₃) of the second type, particularly plate-like or rod-like, serving to synchronize vibrations, particularly flexural vibrations, of the first measuring tube (18₁) and vibrations of the same frequency, particularly flexural vibrations, of the third measuring tube (18₃), wherein said third coupling element is only fixed on the first measuring tube (18₁) and on the third measuring tube (18₃) at a distance from both the first coupling element (24₁) of the first type and from the second coupling element (24₂) of the first type, as well as from the first coupling element (25₁) of the second type
- a fourth coupling element (25₄) of the second type, particularly plate-like or rod-like, serving to synchronize vibrations, particularly flexural vibrations, of the second measuring tube (18₂) and vibrations of the same frequency, particularly flexural vibrations, of the fourth measuring tube (18₄), wherein said fourth coupling element is only fixed on the second measuring tube (18₂) and on the fourth measuring tube (18₄) at a distance from both the first and the second coupling element (24₁, 24₂) of the first type and from the second and third coupling element (25₂, 25₃) of the second type.

10. Sensor as claimed in one of the Claims 7 to 9,
- wherein the first flow divider (20₁) has a flange (6₁) designed to connect the sensor to a pipe segment serving to conduct medium to the sensor and the second flow divider (20₂) has a flange (6₂) designed to connect the sensor to a pipe segment serving to carry the medium away from the sensor;
- wherein each of the flanges (6₁, 6₂), particularly each having a mass of more than 50 kg, has a sealing surface (6_{1A}, 6_{2A}) designed to connect the sensor, in a fluid-tight manner, to the corresponding pipe segment, and wherein a distance between the sealing surfaces (6_{1A}, 6_{2A}) of the two flanges (6₁, 6₂) defines an installation length, L₁₁, of the sensor, particularly greater than 1200 mm and/or less than 3000 mm; and
- wherein a measuring tube length, L₁₈, of the first measuring tube (18₁) corresponding to a length of a section of a bending line of the first measuring tube extending between the first flow opening (20_{1A}) of the first flow divider (20₁) and the first flow opening (20_{2A}) of the second flow divider (20₂) is greater than 1000 mm, particularly greater than 1200 mm and/or less than 2000 mm, and a measuring tube length / installation length ratio, L₁₈/L₁₁, of the sensor, defined by a ratio of the measuring tube length, L₁₈, of the first measuring tube to the installation length, L₁₁, of the sensor, is greater than 0.7, particularly greater than 0.8 and/or less than 0.95, particularly in such a way that a caliber / installation length ratio, D₁₈/L₁₁, of the sensor, defined by a ratio of the caliber, D₁₈, of the first measuring tube to the installation length, L₁₁, of the sensor, is greater than 0.02, particularly greater than 0.05 and/or less than 0.09, and/or in such a way that a vibration length / installation length ratio, L₁₈ₓ/L₁₁, of the sensor, defined by a ratio of the free vibration length, L₁₈ₓ, of the first measuring tube to the installation length, L₁₁, of the sensor, is greater than 0.55, particularly greater than 0.6 and/or less than 0.9.

11. Sensor as claimed in the previous claim,
- wherein a nominal diameter / installation length ratio, D₁₁/L₁₁, of the sensor, defined by a ratio of the nominal diameter of the sensor to the installation length of the sensor, is less than 0.3, particularly less than 0.2 and/or greater than 0.1.

12. Sensor as claimed in one of the previous claims,
- wherein a central segment (7_{1A}) of the sensor housing (7₁) is formed by means of a straight tube, particularly circular-cylindrical; and/or
- wherein a mass ratio, M₁₁/M₁₈, of an empty mass, M₁₁, of the entire sensor in relation to an empty mass, M₁₈, of the first measuring tube is greater than 10, particularly greater than 15 and less than 25; and/or
- wherein each of the two flow dividers (20₁, 20₂) has a mass greater than 20 kg, particularly greater than 40 kg; and/or
- wherein an empty mass, M₁₈, of the first measuring tube, particularly of each of the measuring tubes (18₁, 18₂, 18₃, 18₄), is greater than 20 kg, particularly greater than 30 kg and/or less than 50 kg; and/or
- wherein an empty mass, M₁₁, of the sensor is greater than 200 kg, particularly greater than 300 kg; and/or
- wherein the four measuring tubes (18₁, 18₂, 18₃, 18₄) are identical in design with regard to a material from which their walls are made and/or with regard to their geometrical pipe dimensions, particularly a measuring tube length, a tube wall thickness, a tube outer diameter and/or a caliber; and/or
- wherein the measuring tubes are parallel to one another in pairs; and/or
- wherein the exciter arrangement is designed in such a way that, during operation, the first measuring tube (18₁) and the second measuring tube (18₂) can be excited to produce anti-phase flexural vibrations and the third measuring tube (18₃) and the fourth measuring tube (18₄) can be excited to produce anti-phase flexural vibrations.

13. Sensor as claimed in one of the previous claims, wherein the first and the third vibration sensor (19₁, 19₃) are electrically coupled in series in such a way that a common vibration measuring signal represents common inlet-side vibrations of the first and third measuring tube (18₁, 18₃) in relation to the second and fourth measuring tube (18₂, 18₄), and in that the second and the fourth vibration sensor (19₂, 19₄) are electrically coupled in series in such a way that a common vibration measuring signal represents common outlet-side vibrations of the first and third measuring tube (18₁, 18₃) in relation to the second and the fourth measuring tube (18₂, 18₄).

14. Sensor as claimed in Claim 7, in connection with Claim 10 and 13,
- wherein a measurement length, L₁₉, of the sensor, said length corresponding to a length of a section of a bending line of the first measuring tube extending between the first vibration sensor (19₁) and the second vibration sensor (19₂) is greater than 500 mm, particularly greater than 600 mm and/or less than 1200 mm, and
- wherein a measurement length / installation length ratio, L₁₉/L₁₁, of the sensor, defined by a ratio of the measurement length, L₁₉, to the installation length, L₁₁, of the sensor, is greater than 0.3, particularly greater than 0.4 and/or less than 0.7, particularly in such a way that a caliber / measurement length ratio, D₁₈/L₁₉, of the sensor, defined by a ratio of the caliber, D₁₈, of the first measuring tube to the measurement length, L₁₉, of the sensor, is greater than 0.05, particularly greater than 0.09, and/or in that a measurement length / vibration length ratio, L₁₉/L₁₈ₓ, of the sensor, defined by a ratio of the measurement length, L₁₉, of the sensor to the free vibration length, L₁₈ₓ, of the first measuring tube, is greater than 0.3, particularly greater than 0.4 and/or less than 0.95.

15. Sensor as claimed in one of the previous claims,
- wherein the first and the second vibration exciter (5₁, 5₂) are electrically coupled in series in such a way that a common driver signal excites common vibrations of the first and the third measuring tube (18₁, 18₃) in relation to the second and the fourth measuring tube (18₂, 18₄).

16. In-line measuring device designed to measure a density and/or a mass flow rate, particularly also a total mass flow rate totalized over a time interval, of a medium, particularly a gas, a liquid, a powder or another fluid substance at least temporarily flowing through a pipe, particularly with a mass flow rate of more than 1000 t/h, said in-line measuring device, particularly designed as a compact device, comprising a sensor as claimed in one of the previous claims as well as a measuring device electronics unit electrically coupled with the sensor, particularly also mechanically connected in a rigid manner.

17. Use of a sensor as claimed in one of the Claims 1 to 15 designed to measure a density and/or a mass flow rate, particularly also a total mass flow rate totalized over a time interval, of a medium, particularly a gas, a liquid, a powder or another fluid substance at least temporarily flowing through a pipe with a mass flow rate greater than 1000 t/h, particularly greater than 1500 t/h.

## Revendications

1. Capteur du type à vibrations destiné à la mesure d'au moins une grandeur physique d'un produit apte à s'écouler dans une conduite, notamment un gaz, un liquide, une poudre ou une autre substance apte à s'écouler, et/ou destiné à la génération de forces de Coriolis servant à la mesure d'un débit massique d'un produit apte à s'écouler, notamment d'un gaz, d'un liquide, d'une poudre ou d'une autre substance apte à s'écouler, acheminé dans une conduite, un diamètre nominal, D₁₁, du capteur étant supérieur à 100 mm, lequel capteur comprend :
- un boîtier de capteur (7₁), dont une première extrémité de boîtier côté entrée est formée au moyen d'un premier diviseur de débit (20₁) côté entrée, lequel diviseur de débit comporte exactement quatre ouvertures d'écoulement (20_{1A}, 20_{1B}, 20_{1C}, 20_{1D}) espacées les unes des autres, et dont une deuxième extrémité de boîtier côté sortie est formée au moyen d'un deuxième diviseur de débit (20₂) côté sortie, lequel diviseur de débit comporte exactement quatre ouvertures d'écoulement (20_{2A}, 20_{2B}, 20_{2C}, 20_{2D}) espacées les unes des autres ;
- un arrangement de tubes avec exactement quatre tubes de mesure (18₁, 18₂, 18₃, 18₄) courbés, notamment au moins partiellement en forme de V et/ou au moins partiellement en forme d'arc de cercle, lesquels tubes sont raccordés aux diviseurs de débit (20₁, 20₂), qui sont notamment de conception identique, pour former des chemins d'écoulement couplés en parallèle en terme d'écoulement, et lesquels tubes sont destinés à acheminer le produit en écoulement, tubes parmi lesquels
- un premier tube de mesure (18₁) débouche avec une première extrémité de tube de mesure côté entrée dans une première ouverture d'écoulement (20_{1A}) du premier diviseur de débit (20₁) et avec une deuxième extrémité de tube de mesure côté sortie dans une première ouverture d'écoulement (20_{2A}) du deuxième diviseur de débit (20₂),
- un deuxième tube de mesure (18₂), lequel est, au moins par sections, parallèle au premier tube de mesure, débouche avec une première extrémité de tube de mesure côté entrée dans une deuxième ouverture d'écoulement (20_{1B}) du premier diviseur de débit (20₁) et avec une deuxième extrémité de tube de mesure côté sortie dans une deuxième ouverture d'écoulement (20_{2B}) du deuxième diviseur de débit (20₂),
- un troisième tube de mesure (18₃) débouche avec une première extrémité de tube de mesure côté entrée dans une troisième ouverture d'écoulement (20_{1C}) du premier diviseur de débit (20₁) et avec une deuxième extrémité de tube de mesure côté sortie dans une troisième ouverture d'écoulement (20_{2C}) du deuxième diviseur de débit (20₂) et
- un quatrième tube de mesure (18₄), lequel est, au moins par sections, parallèle au troisième tube de mesure, débouche avec une première extrémité de tube de mesure côté entrée dans une quatrième ouverture d'écoulement (20_{1D}) du premier diviseur de débit (20₁) et avec une deuxième extrémité de tube de mesure côté sortie dans une quatrième ouverture d'écoulement (20_{2D}) du deuxième diviseur de débit (20₂),
- un dispositif d'excitation électromécanique (5), formé notamment au moyen d'excitateurs de vibrations électrodynamiques (5₁, 5₂), lequel dispositif est destiné à générer et/ou à maintenir les vibrations mécaniques, notamment les vibrations de flexion, des quatre tubes de mesure (18₁, 18₂, 18₃, 18₄) ; ainsi que
- un arrangement de capteurs (19) réagissant aux vibrations, notamment aux vibrations de flexion excitées par le dispositif d'excitation, des tubes de mesure (18₁, 18₂, 18₃, 18₄), notamment des capteurs électrodynamiques (19₁, 19₂, 19₃, 19₄) et/ou des capteurs formés au moyen de capteurs de vibrations (19₁, 19₂, 19₃, 19₄) de construction identique, lesquels capteurs sont destinés à générer des signaux de mesure de vibrations représentant les vibrations, notamment les vibrations de flexion, des tubes de mesure (18₁, 18₂, 18₃, 18₄) ;
- chacun des premier et deuxième diviseurs de débit étant conçu respectivement en tant que partie intégrante du boîtier ;
- les tubes de mesure étant conçus et disposés dans le capteur de telle sorte que
-- l'arrangement de tubes présente un premier plan de coupe longitudinal imaginaire (XZ) qui se situe aussi bien entre le premier tube de mesure et le troisième tube de mesure qu'entre le deuxième tube de mesure et le quatrième tube de mesure et par rapport auquel l'arrangement de tubes est symétrique, et
-- l'arrangement de tubes présente un deuxième plan de coupe longitudinal imaginaire (YZ), perpendiculaire à son premier plan de coupe longitudinal imaginaire (XZ), lequel deuxième plan s'étend aussi bien entre le premier tube de mesure et le deuxième tube de mesure qu'entre le troisième tube de mesure et le quatrième tube de mesure et par rapport auquel l'arrangement de tubes est également symétrique ;
- le dispositif d'excitation (5) étant formé au moyen d'un premier excitateur de vibrations (5₁), notamment électrodynamique, et/ou qui excite de manière différentielle les vibrations du premier tube de mesure (18₁) par rapport au deuxième tube de mesure (18₂), et au moyen d'un deuxième excitateur de vibrations (5₂), notamment électrodynamique, et/ou qui excite de manière différentielle les vibrations du troisième tube de mesure (18₃) par rapport au quatrième tube de mesure (18₄) ; et
- l'arrangement de capteurs (19) étant formé au moyen d'un premier capteur de vibrations (19₁) disposé côté entrée, notamment électrodynamique, et/ou qui mesure de manière différentielle les vibrations du premier tube de mesure (18₁) par rapport au deuxième tube de mesure (18₂), d'un deuxième capteur de vibrations (19₂) disposé côté sortie, notamment électrodynamique, et/ou qui mesure les vibrations du premier tube de mesure (18₁) par rapport au deuxième tube de mesure (18₂), d'un troisième capteur de vibrations (19₃) disposé côté entrée, notamment électrodynamique, et/ou qui mesure les vibrations du troisième tube de mesure (18₃) par rapport au quatrième tube de mesure (18₄), et d'un quatrième capteur de vibrations (19₄) disposé côté sortie, notamment électrodynamique, et/ou qui mesure les vibrations du troisième tube de mesure (18₃) par rapport au quatrième tube de mesure (18₄).

2. Capteur selon la revendication précédente, pour lequel les deux diviseurs de débit (20₁, 20₂) sont conçus et disposés dans le capteur de telle sorte que
- un premier axe de liaison imaginaire (Z₁) du capteur, reliant de manière imaginaire la première ouverture d'écoulement (20_{1A}) du premier diviseur de débit (20₁) à la première ouverture d'écoulement (20_{2A}) du deuxième diviseur de débit (20₂), est parallèle à un deuxième axe de liaison imaginaire (Z₂) du capteur, reliant de manière imaginaire la deuxième ouverture d'écoulement (20_{1B}) du premier diviseur de débit (20₁) à la deuxième ouverture d'écoulement (20_{2B}) du deuxième diviseur de débit (20₂),
- un troisième axe de liaison imaginaire (Z₃) du capteur, reliant de manière imaginaire la troisième ouverture d'écoulement (20_{1C}) du premier diviseur de débit (20₁) à la troisième ouverture d'écoulement (20_{2C}) du deuxième diviseur de débit (20₂), est parallèle à un quatrième axe de liaison imaginaire (Z₄) du capteur, reliant de manière imaginaire la quatrième ouverture d'écoulement (20_{1D}) du premier diviseur de débit (20₁) à la quatrième ouverture d'écoulement (20_{2B}) du deuxième diviseur de débit (20₂), et
- un premier plan de coupe longitudinal imaginaire (XZ₁) du capteur, dans lequel s'étendent le premier axe de liaison imaginaire (Z₁), notamment parallèlement à un axe d'écoulement principal du capteur affleurant la conduite, et le deuxième axe de liaison imaginaire (Z₂), est parallèle à un deuxième plan de coupe longitudinal imaginaire (XZ₂) du capteur, dans lequel s'étendent le troisième axe de liaison imaginaire (Z₃) et le quatrième axe de liaison imaginaire (Z₄) ; notamment de telle sorte que le premier plan de coupe longitudinal imaginaire (XZ) de l'arrangement de tubes se situe entre le premier et le deuxième plan de coupe longitudinal imaginaire (XZ₁, XZ₂) du capteur et/ou est parallèle au premier et au deuxième plan de coupe longitudinal imaginaire (XZ₁, XZ₂) du capteur.

3. Capteur selon la revendication précédente, pour lequel les deux diviseurs de débit (20₁, 20₂) sont conçus et disposés dans le capteur de telle sorte que
- un troisième plan de coupe longitudinal imaginaire (YZ₁) du capteur, dans lequel s'étendent le premier axe de liaison imaginaire (Z₁) et le troisième axe de liaison imaginaire (Z₃), est parallèle à un quatrième plan de coupe longitudinal imaginaire (XY₂) du capteur, dans lequel s'étendent le deuxième axe de liaison imaginaire (Z₂) et le quatrième axe de liaison imaginaire (Z₄), et
- le deuxième plan de coupe longitudinal imaginaire (YZ) de l'arrangement de tubes s'étend entre le troisième plan de coupe longitudinal imaginaire (YZ₁) du capteur et le quatrième plan de coupe longitudinal imaginaire (YZ₂) du capteur, notamment de telle sorte que le deuxième plan de coupe longitudinal imaginaire (YZ) de l'arrangement de tubes est parallèle au troisième plan de coupe longitudinal imaginaire (YZ₁) du capteur et parallèle au quatrième plan de coupe longitudinal imaginaire (YZ₂) du capteur.

4. Capteur selon l'une des revendications précédentes,
- pour lequel les quatre ouvertures d'écoulement (20_{1A}, 20_{1B}, 20_{1C}, 20_{1D}) du premier diviseur de débit (20₁) sont disposées de telle sorte que des centres de gravité de surface imaginaires associés à des surfaces de section, notamment circulaires, des ouvertures d'écoulement (20_{1A}, 20_{1B}, 20_{1C}, 20_{1D}) du premier diviseur de débit (20₁) forment les points d'angle d'un carré imaginaire, lesdites surfaces de section étant disposées dans un plan de coupe transversal imaginaire commun du premier diviseur de débit (20₁), notamment perpendiculairement au premier plan de coupe longitudinal imaginaire du capteur ou au deuxième plan de coupe longitudinal imaginaire du capteur ;
- pour lequel les quatre ouvertures d'écoulement (20_{2A}, 20_{2B}, 20_{2C}, 20_{2D}) du deuxième diviseur de débit (20₂) sont disposées de telle sorte que des centres de gravité de surface imaginaires associés à des surfaces de section, notamment circulaires, des ouvertures d'écoulement (20_{2A}, 20_{2B}, 20_{2C}, 20_{2D}) du deuxième diviseur de débit (20₂) forment les points d'angle d'un carré imaginaire, lesdites surfaces de section étant disposées dans un plan de coupe transversal imaginaire commun du deuxième diviseur de débit (20₂), notamment perpendiculairement au premier plan de coupe longitudinal imaginaire du capteur ou au deuxième plan de coupe longitudinal imaginaire du capteur ;
- pour lequel chacun des quatre tubes de mesure (18₁, 18₂, 18₃, 18₄), notamment de même calibre, est disposé de telle sorte que
-- une plus petite distance latérale de chacun des quatre tubes de mesure, notamment de même longueur, par rapport à une paroi latérale du boîtier de capteur est respectivement supérieure à zéro, notamment supérieure à 3 mm et/ou supérieure au double d'une épaisseur de paroi de tube respective, et/ou
-- une plus petite distance latérale entre deux tubes de mesure adjacents est respectivement supérieure à 3 mm et/ou supérieure à la somme des épaisseurs de paroi de tube respectives ; et
- pour lequel chacune des ouvertures d'écoulement est disposée de telle sorte que
-- une plus petite distance latérale de chacune des ouvertures d'écoulement par rapport à une paroi latérale du boîtier de capteur est respectivement supérieure à zéro, notamment supérieure à 3 mm et/ou supérieure au double d'une plus petite épaisseur de paroi des tubes de mesure, et/ou
-- une plus petite distance latérale entre les ouvertures d'écoulement est supérieure à 3 mm et/ou supérieure au double d'une plus petite épaisseur de paroi des tubes de mesure.

5. Capteur selon l'une des revendications précédentes, comprenant en outre
- un premier élément de couplage (24₁) de premier type, notamment en forme de plaque, lequel élément est fixé, côté entrée, au moins au premier tube de mesure et au deuxième tube de mesure, à distance à la fois du premier diviseur de débit et du deuxième diviseur de débit, afin de former des nœuds de vibrations côté entrée au moins pour les vibrations, notamment les vibrations de flexion, du premier tube de mesure et pour les vibrations en opposition de phase à celles-ci, notamment les vibrations de flexion, du deuxième tube de mesure, ainsi que
- un deuxième élément de couplage (24₂) de premier type, notamment en forme de plaque et/ou dont la construction est identique à celle du premier élément de couplage (24₁), lequel deuxième élément est fixé, côté sortie, au moins au premier tube de mesure et au deuxième tube de mesure, à distance à la fois du premier diviseur de débit et du deuxième diviseur de débit, afin de former des nœuds de vibrations côté sortie au moins pour les vibrations, notamment les vibrations de flexion, du premier tube de mesure et pour les vibrations en opposition de phase à celles-ci, notamment les vibrations de flexion, du deuxième tube de mesure ;
- pour lequel le premier tube de mesure et le deuxième tube de mesure sont parallèles l'un à l'autre au moins sur une zone s'étendant entre le premier élément de couplage de premier type et le deuxième élément de couplage de premier type, et pour lequel le troisième tube de mesure et le quatrième tube de mesure sont parallèles l'un à l'autre au moins sur une zone s'étendant entre le premier élément de couplage de premier type et le deuxième élément de couplage de premier type.

6. Capteur selon la revendication 5,
- pour lequel les quatre tubes de mesure (18₁, 18₂, 18₃, 18₄) sont reliés mécaniquement les uns aux autres au moyen du premier élément de couplage (24₁) de premier type et au moyen du deuxième élément de couplage (24₂) de premier type,
- pour lequel le premier élément de couplage (24₁) de premier type est conçu en forme de plaque, notamment de telle sorte qu'il présente une surface de base rectangulaire, carrée, ronde, cruciforme ou en forme de H, et
- pour lequel le deuxième élément de couplage (24₂) de premier type est conçu en forme de plaque, notamment de la même manière que le premier élément de couplage (24₁) de premier type, notamment de telle sorte qu'il présente une surface de base rectangulaire, carrée, ronde, cruciforme ou en forme de H.

7. Capteur selon l'une des revendications 5 à 6,
- pour lequel chacun des quatre tubes de mesure (18₁, 18₂, 18₃, 18₄), notamment de même calibre et/ou de même longueur, présente un calibre, D₁₈, qui est supérieur à 40 mm, notamment supérieur à 60 mm,
- pour lequel une longueur de vibration libre, L₁₈ₓ, du premier tube de mesure, notamment de chacun des tubes de mesure, laquelle longueur correspond à une longueur d'une section de la ligne de flexion s'étendant entre le premier élément de couplage de premier type et le deuxième élément de couplage de second type, est inférieure à 3 000 mm, notamment inférieure à 2 500 mm, et/ou supérieure à 800 mm, et un rapport calibre / longueur de vibration, D₁₈/L₁₈ₓ, du capteur, défini par un rapport entre le calibre, D₁₈, du premier tube de mesure (18₁) et la longueur de vibration libre, L₁₈ₓ, du premier tube de mesure (18₁), est supérieur à 0,03, notamment supérieur à 0,05 et/ou inférieur à 0,15, et
- pour lequel les tubes de mesure sont courbés et disposés de telle sorte qu'un rapport calibre / hauteur de l'arrangement de tubes, défini par un rapport du calibre, D₁₈, du premier tube de mesure (18₁) à un allongement latéral maximal de l'arrangement de tubes, mesuré d'un sommet du premier tube de mesure à un sommet du troisième tube de mesure, est supérieur à 0,1, notamment supérieur à 0,2 et/ou inférieur à 0,35.

8. Capteur selon l'une des revendications précédentes, comprenant en outre
- un premier élément de couplage (25₁) de second type, notamment en forme de plaque ou de tige, lequel élément sert à synchroniser les vibrations, notamment les vibrations de flexion, du premier tube de mesure (18₁) et les vibrations de même fréquence, notamment les vibrations de flexion, du troisième tube de mesure (18₃), lequel premier élément de couplage est fixé - à distance respectivement aussi bien du premier élément de couplage (24₁) de premier type que du deuxième élément de couplage (24₂) de premier type - uniquement sur le premier tube de mesure (18₁) et sur le troisième tube de mesure (18₃), ainsi que
- un deuxième élément de couplage (25₂) de second type, notamment en forme de plaque ou de tige, lequel élément sert à synchroniser les vibrations, notamment les vibrations de flexion, du deuxième tube de mesure (18₂) et les vibrations de même fréquence, notamment les vibrations de flexion, du quatrième tube de mesure (18₄), lequel deuxième élément de couplage est fixé - à distance aussi bien du premier élément de couplage (24₁) de premier type que du deuxième élément de couplage (24₂) de premier type, et également à distance du premier élément de couplage (25₁) de second type - uniquement sur le deuxième tube de mesure (18₂) et sur le quatrième tube de mesure (18₄).

9. Capteur selon la revendication 8, comprenant en outre :
- un troisième élément de couplage (25₃) de second type, notamment en forme de plaque ou de tige, lequel élément sert à synchroniser les vibrations, notamment les vibrations de flexion, du premier tube de mesure (18₁) et les vibrations de même fréquence, notamment les vibrations de flexion, du troisième tube de mesure (18₃), lequel troisième élément de couplage est fixé - à distance à la fois du premier élément de couplage (24₁) de premier type et du deuxième élément de couplage (24₂) de premier type, ainsi que du premier élément de couplage (25₁) de second type - uniquement sur le premier tube de mesure (18₁) et sur le troisième tube de mesure (18₃), ainsi que
- un quatrième élément de couplage (25₄) de second type, notamment en forme de plaque ou de tige, lequel élément sert à synchroniser les vibrations, notamment les vibrations de flexion, du deuxième tube de mesure (18₂) et les vibrations de même fréquence, notamment les vibrations de flexion, du quatrième tube de mesure (18₄), lequel quatrième élément de couplage est fixé - à distance respectivement aussi bien du premier et du deuxième élément de couplage (24₁, 24₂) de premier type que du deuxième et du troisième élément de couplage (25₂, 25₃) de second type - uniquement sur le deuxième tube de mesure (18₂) et sur le quatrième tube de mesure (18₄).

10. Capteur selon l'une des revendications 7 à 9,
- pour lequel le premier diviseur de débit (20₁) présente une bride (6₁) destinée au raccordement du capteur à un segment de conduite servant à acheminer le produit au capteur et le deuxième diviseur de débit (20₂) présente une bride (6₂) destinée au raccordement du capteur à un segment de conduite servant à évacuer le produit du capteur ;
- pour lequel chacune des brides (6₁, 6₂), notamment chacune affichant une masse de plus de 50 kg, présente une surface d'étanchéité respective (6_{1A}, 6_{2A}) destinée à la liaison étanche aux fluides du capteur au segment de conduite correspondant respectif, et pour lequel une distance entre les surfaces d'étanchéité (6_{1A}, 6_{2A}) des deux brides (6₁, 6₂) définit une longueur de montage, L₁₁, du capteur, notamment supérieure à 1 200 mm et/ou inférieure à 3 000 mm ; et
- pour lequel une longueur de tube de mesure, L₁₈, du premier tube de mesure (18₁) correspondant à une longueur d'une section d'une ligne de flexion du premier tube de mesure s'étendant entre la première ouverture d'écoulement (20_{1A}) du premier diviseur de débit (20₁) et la première ouverture d'écoulement (20_{2A}) du deuxième diviseur de débit (20₂) est supérieure à 1 000 mm, notamment supérieure à 1 200 mm et/ou inférieure à 2 000 mm, et un rapport longueur de tube de mesure / longueur de montage, L₁₈/L₁₁, du capteur, défini par un rapport entre la longueur de tube de mesure, L₁₈, du premier tube de mesure et la longueur de montage, L₁₁, du capteur, est supérieur à 0,7, notamment supérieur à 0,8 et/ou inférieur à 0,95, notamment de telle sorte qu'un rapport calibre / longueur de montage, D₁₈/L₁₁, du capteur, défini par un rapport entre le calibre, D₁₈, du premier tube de mesure et la longueur de montage, L₁₁, du capteur, est supérieur à 0,02, notamment supérieur à 0,05 et/ou inférieur à 0,09, et/ou de telle sorte qu'un rapport longueur de vibration / longueur de montage, L_{18x/}L₁₁, du capteur, défini par un rapport entre la longueur de vibration libre, L₁₈ₓ, du premier tube de mesure et la longueur de montage, L₁₁, du capteur, est supérieur à 0,55, notamment supérieur à 0,6 et/ou inférieur à 0,9.

11. Capteur selon la revendication précédente,
- pour lequel un rapport largeur nominale / longueur de montage, D₁₁/L₁₁, du capteur, défini par un rapport entre la largeur nominale du capteur et la longueur de montage du capteur, est inférieur à 0,3, notamment inférieur à 0,2 et/ou supérieur à 0,1.

12. Capteur selon l'une des revendications précédentes,
- pour lequel un segment central (7_{1A}) du boîtier de capteur (7₁) est formé au moyen d'un tube droit, notamment circulaire-cylindrique ; et/ou
- pour lequel un rapport de masse, M₁₁/M₁₈, d'une masse à vide, M₁₁, du capteur complet par rapport à une masse à vide, M₁₈, du premier tube de mesure est supérieur à 10, notamment supérieur à 15 et inférieur à 25 ; et/ou
- pour lequel chacun des deux diviseurs de débit (20₁, 20₂) présente une masse de plus de 20 kg, notamment de plus de 40 kg ; et/ou
- pour lequel une masse à vide, M₁₈, du premier tube de mesure, notamment de chacun des tubes de mesure (18₁, 18₂, 18₃, 18₄), est supérieure à 20 kg, notamment supérieure à 30 kg et/ou inférieure à 50 kg ; et/ou
- pour lequel une masse à vide, M₁₁, du capteur est supérieure à 200 kg, notamment supérieure à 300 kg ; et/ou
- pour lequel les quatre tubes de mesure (18₁, 18₂, 18₃, 18₄) sont de construction identique en ce qui concerne un matériau dont sont constituées leurs parois de tube et/ou en ce qui concerne leurs dimensions géométriques de tube, notamment une longueur de tube de mesure, une épaisseur de paroi de tube, un diamètre extérieur de tube et/ou un calibre ; et/ou
- pour lequel les tubes de mesure sont parallèles les uns aux autres par paires ; et/ou
- pour lequel le dispositif d'excitation est conçu de telle sorte qu'en fonctionnement, le premier tube de mesure (18₁) et le deuxième tube de mesure (18₂) peuvent être excités en vibrations de flexion en opposition de phase et le troisième tube de mesure (18₃) et le quatrième tube de mesure (18₄) peuvent être excités en vibrations de flexion en opposition de phase.

13. Capteur selon l'une des revendications précédentes, pour lequel le premier et le troisième capteur de vibrations (19₁, 19₃) sont couplés électriquement en série de telle sorte qu'un signal de mesure de vibrations commun représente les vibrations communes côté entrée du premier et du troisième tube de mesure (18₁, 18₃) par rapport au deuxième et au quatrième tube de mesure (18₂, 18₄), et en ce que le deuxième et le quatrième capteur de vibrations (19₂, 19₄) sont couplés électriquement en série de telle sorte qu'un signal de mesure de vibrations commun représente les vibrations communes côté sortie du premier et du troisième tube de mesure (18₁, 18₃) par rapport au deuxième et au quatrième tube de mesure (18₂, 18₄).

14. Capteur selon la revendication 7, en liaison avec la revendication 10 et 13,
- pour lequel une longueur de mesure, L₁₉, du capteur, laquelle longueur correspond à une longueur d'une partie d'une ligne de flexion du premier tube de mesure s'étendant entre le premier capteur de vibrations (19₁) et le second capteur de vibrations (19₂) est supérieure à 500 mm, notamment supérieure à 600 mm et/ou inférieure à 1 200 mm, et
- pour lequel un rapport longueur de mesure / longueur de montage, L₁₉/L₁₁, du capteur, défini par un rapport entre la longueur de mesure, L₁₉, et la longueur de montage, L₁₁, du capteur, est supérieur à 0,3, notamment supérieur à 0,4 et/ou inférieur à 0,7, notamment de telle sorte qu'un rapport calibre / longueur de mesure, D₁₈/L₁₉, du capteur, défini par un rapport entre le calibre, D₁₈, du premier tube de mesure et la longueur de mesure, L₁₉, du capteur, est supérieur à 0,05, notamment supérieur à 0,09, et/ou en ce qu'un rapport longueur de mesure / longueur de vibration, L₁₉/L₁₈ₓ, du capteur, défini par un rapport entre la longueur de mesure, L₁₉, du capteur et la longueur de vibration libre, L₁₈ₓ, du premier tube de mesure, est supérieur à 0,3, notamment supérieur à 0,4 et/ou inférieur à 0,95.

15. Capteur selon l'une des revendications précédentes,
- pour lequel le premier et le deuxième excitateur de vibrations (5₁, 5₂) sont couplés électriquement en série, de telle sorte qu'un signal d'attaque commun excite des vibrations communes du premier et du troisième tube de mesure (18₁, 18₃) par rapport au deuxième et au quatrième tube de mesure (18₂, 18₄).

16. Appareil de mesure en ligne destiné à la mesure d'une densité et/ou d'un débit massique, notamment également un débit massique total totalisé sur un intervalle de temps, d'un produit, notamment d'un gaz, d'un liquide, d'une poudre ou d'une autre substance fluide, s'écoulant au moins temporairement dans une conduite, notamment avec un débit massique de plus de 1 000 t/h, lequel appareil de mesure en ligne, notamment conçu en tant qu'appareil compact, comprend un capteur selon l'une des revendications précédentes ainsi qu'une électronique d'appareil de mesure couplée électriquement au capteur, notamment reliée mécaniquement de manière rigide au même capteur.

17. Utilisation d'un capteur selon l'une des revendications 1 à 15 destiné à la mesure d'une densité et/ou d'un débit massique, notamment également d'un débit massique total totalisé sur un intervalle de temps, d'un produit, notamment d'un gaz, d'un liquide, d'une poudre ou d'une autre substance fluide, s'écoulant au moins temporairement dans une conduite avec un débit massique supérieur à 1 000 t/h, notamment supérieur à 1 500 t/h.
